# EUROPÄISCHE PATENTSCHRIFT

(11) **EP 2 820 343 B1**
(45) Veröffentlichungstag und Bekanntmachung des Hinweises auf die Patenterteilung: **02.12.2015**
(21) Anmeldenummer: 13706428.3
(22) Anmeldetag: 19.02.2013
(51) Int. Cl.: F16L 21/00, F16L 25/14

(54) **MANSCHETTE ZUM ANPRESSEN EINER DICHTMANSCHETTE AN EIN ERSTES UND EIN ZWEITES ROHR UND SYSTEM UND ANORDNUNG MIT EINER DERARTIGEN MANSCHETTE**
SLEEVE FOR PRESSING A SEALING SLEEVE ONTO A FIRST AND A SECOND PIPE, AND SYSTEM AND ASSEMBLY COMPRISING SUCH A SLEEVE
MANCHON DESTINÉ À PRESSER UN MANCHON D'ÉTANCHÉITÉ CONTRE UN PREMIER TUBE ET UN SECOND TUBE, ET SYSTÈME ET ENSEMBLE ÉQUIPÉS D'UN TEL MANCHON

(30) Priorität: 27.02.2012 DE 102012101553
(43) Veröffentlichungstag der Anmeldung: 07.01.2015
(73) Patentinhaber: REHAU AG + Co, 95111 Rehau (DE)
(72) Erfinder: MEHL, Helmut, 35781 Weilburg (DE); SIEBER, Jürgen, 91074 Herzogenaurach (DE); LEIHBECHER, Heiko, 90596 Schwanstetten (DE); ROTH, Sebastian, 91056 Erlangen (DE); HENDEL, Roland, 91086 Aurachtal (DE)
(86) Internationale Anmeldenummer: PCT/EP2013/000474
(87) Internationale Veröffentlichungsnummer: WO 2013/127498

(56) Entgegenhaltungen:
- EP-A1- 2 072 877
- DE-U1-202008 005 936
- DE-U1-202010 013 624
- US-A- 4 186 948

## Beschreibung

### Hintergrund der Erfindung

Die vorliegende Erfindung betrifft eine Manschette zum Anpressen einer Dichtmanschette an ein erstes und ein zweites Rohr und ein System mit einer derartigen Manschette.

Insbesondere zur Herstellung einer Verbindung von zwei Abwasserrohren ist es bekannt, Rohrendabschnitte der beiden Rohre über eine Dichtmanschette zu verbinden und zum Sichern bzw. Festigen der Verbindung, eine Manschette zum Anpressen der Dichtmanschette an die beiden Rohre vorzusehen, welche in der Regel mittels Spannbändern bzw. Spannschellen an die Dichtmanschette gepresst wird. Insbesondere im Abwasserbereich ist es oft erforderlich, zwei Rohre mit unterschiedlichen Außendurchmessern zu verbinden. Um hierbei einen aufwendigen Einsatz von Ausgleichringen zu vermeiden, sind Vorrichtungen bekannt, die eine Verbindung der Rohre ohne Vorsehen von Ausgleichsringen ermöglichen. So ist aus der DE 10 2007 061 288 B4 bekannt, zum Anpressen einer Dichtmanschette an die beiden Rohre, einen Federkorb vorzusehen, der mittels Spannbändern zum Anpressen an die Dichtmanschette zusammenziehbar ist, wobei die Konstruktion des Federkorbs im begrenztem Masse eine Anpassung an die unterschiedlichen Außendurchmesser möglich macht. Da auch im zusammengezogenen Zustand des Federkorbs in der Regel Freiräume an dem Federkorb verbleiben, können nicht alle Bereiche der Dichtmanschette in gleichem Maße an die beiden Rohre gepresst werden, einhergehend mit einer Einschränkung der Belastbarkeit der Verbindung.

### Zugrundeliegende Aufgabe

Gegenüber den bekannten Lösungen, ist es Aufgabe der vorliegenden Erfindung, eine alternative Vorrichtung zum Anpressen einer Dichtmanschette an ein erstes und ein zweites Rohr und ein System und eine Anordnung mit einer derartigen Vorrichtung anzugeben.

### Erfindungsgemäße Lösung

Diese Aufgabe wird erfindungsgemäß mit einer Manschette zum Anpressen einer Dichtmanschette an ein erstes und ein zweites Rohr mit den Merkmalen des Anspruchs 1, mit einem System mit den Merkmalen des Anspruchs 15 und mit einer Anordnung mit den Merkmalen des Anspruchs 16 gelöst.

Die erfindungsgemäße Manschette weist einen aus den ersten Anpresselementen gebildeten ersten Manschetten-Endabschnitt auf, der eine erste Öffnung zur Aufnahme des ersten Endabschnitts der Dichtmanschette aufweist. Ferner weist die erfindungsgemäße Manschette einen aus den zweiten Anpresselementen gebildeten zweiten Manschetten-Endabschnitt auf, der eine zweite Öffnung zur Aufnahme des ersten Endabschnitts der Dichtmanschette aufweist. Das erste und das zweite Rohr sind hierbei über die Dichtmanschette miteinander verbunden und zum Bilden dieser Verbindung nimmt der erste Endabschnitt der Dichtmanschette einen Rohrendabschnitt des ersten Rohrs auf und der zweite Endabschnitt der Dichtmanschette nimmt einen Rohrendabschnitt des zweiten Rohrs aufs. Die Außendurchmesser können hierbei gleich groß sein oder sich voneinander unterscheiden - so kann z.B. der Außendurchmesser des ersten Rohrs größer sein als der Außendurchmesser des zweiten Rohrs oder umgekehrt.

Die ersten Anpresselemente sind entlang eines Umfangs eines ersten Kreises aufeinanderfolgend angeordnet und bilden den ersten Manschetten-Endabschnitt mit der ersten Öffnung zur Aufnahme des ersten Endabschnitts der Dichtmanschette. Ferner sind die zweiten Anpresselemente entlang eines Umfangs eines zweiten Kreises aufeinanderfolgend angeordnet und bilden den zweiten Manschetten-Endabschnitt mit der zweiten Öffnung zur Aufnahme des zweiten Endabschnitts der Dichtmanschette.

Es kann eine beliebige Mehrzahl bzw. Anzahl von ersten Anpresselementen zum Bilden des ersten Manschetten-Endabschnitts vorgesehen sein. Entsprechend kann auch eine beliebige Mehrzahl bzw. Anzahl von zweiten Anpresselementen zum Bilden des zweiten Manschetten-Endabschnitts vorgesehen sein. Besonders bevorzugt kann eine Mehrzahl von wenigstens 5 ersten Anpresselementen vorgesehen sein. Entsprechend kann besonders bevorzugt eine Mehrzahl von wenigstens 5 zweiten Anpresselementen vorgesehen sein. Besonders bevorzugt entspricht die Mehrzahl bzw. Anzahl der ersten Anpresselemente der Mehrzahl bzw. Anzahl der zweiten Anpresselemente.

Erfindungsgemäß ist vorgesehen, dass sich jeweils zwei benachbarte erste Anpresselemente des ersten Manschetten-Endabschnitts in radialer Richtung des ersten Kreises innerhalb eines Überlappungsbereichs überlappen (bzw. in radialer Richtung des ersten Manschetten-Endabschnitts innerhalb eines Überlappungsbereichs überlappen), wobei eines der beiden benachbarten ersten Anpresselemente an dem jeweiligen anderen ersten Anpresselement beweglich angebracht ist, und wobei der Überlappungsbereich durch aufeinander zu bewegen der benachbarten ersten Anpresselemente vergrößerbar oder durch voneinander wegbewegen der benachbarten ersten Anpresselemente verkleinerbar ist. Entsprechendes ist auch für die zweiten Anpresselemente des zweiten Manschetten-Endabschnitts vorgesehen, wobei sich hier jeweils zwei benachbarte zweite Anpresselemente des zweiten Manschetten-Endabschnitts in radialer Richtung des zweiten Kreises innerhalb eines Überlappungsbereichs überlappen (bzw. in radialer Richtung des zweiten Manschetten-Endabschnitts innerhalb eines Überlappungsbereichs überlappen).

Besonders bevorzugt kann die bewegliche Anbringung eines der beiden benachbarten ersten Anpresselemente an dem jeweiligen anderen ersten Anpresselement bzw. bewegliche Anbringung eines der beiden benachbarten zweiten Anpresselemente an dem jeweiligen anderen zweiten Anpresselement in Form einer manuell lösbaren Anbringung bzw. in Form einer manuell herstellbaren bzw. bildbaren Anbringung ausgebildet sein. Hierfür könnte z.B. wenigstens eine Schnappverbindung vorgesehen sein. Hiermit wäre z.B. der Vorteil verbunden, dass die erfindungsgemäße Manschette auf einfache und praktische Weise um die zu verpressende Dichtmanschette herum zusammenbaubar sein kann.

Jedes erste Anpresselement weist wenigstens eine erste Anpressfläche auf, die zum Anpressen des ersten Endabschnitts der Dichtmanschette an den Rohrendabschnitt des ersten Rohrs vorgesehen ist, wenn dieser in der ersten Öffnung aufgenommen ist. Entsprechend weist jedes zweite Anpresselement wenigstens eine zweite Anpressfläche auf, die zum Anpressen des zweiten Endabschnitts der Dichtmanschette an den Rohrendabschnitt des zweiten Rohrs vorgesehen ist, wenn dieser in der zweiten Öffnung aufgenommen ist.

Durch Vergrößern aller Überlappungsbereiche des ersten Manschetten-Endabschnitts ist die erste Öffnung des ersten Manschetten-Endabschnitts unter Verformung aller ersten Anpresselemente verengbar. Ferner ist durch Vergrößern aller Überlappungsbereiche des zweiten Manschetten-Endabschnitts die zweite Öffnung des zweiten Manschetten-Endabschnitts unter Verformung aller zweiten Anpresselemente verengbar.

Durch das Verengen der ersten Öffnung sind die ersten Anpressflächen aller ersten Anpresselemente an den ersten Endabschnitt der Dichtmanschette anpressbar, und durch das Verengen der zweiten Öffnung sind die zweiten Anpressflächen aller zweiten Anpresselemente an den zweiten Endabschnitt der Dichtmanschette anpressbar.

Erfindungsgemäß kann der erste bzw. zweite Endabschnitt der Dichtmanschette sehr gleichmäßig von den ersten bzw. zweiten Anpressflächen an den Rohrendabschnitt des ersten bzw. zweiten Rohrs gepresst werden, und zwar durch Vergrößern aller Überlappungsbereiche des ersten bzw. zweiten Manschetten-Endabschnitts durch Aufeinanderzubewegen der benachbarten ersten bzw. zweiten Anpresselemente und die damit einhergehende Verengung der ersten bzw. zweiten Öffnung unter Verformung aller ersten bzw. zweiten Anpresselemente. Insbesondere ist auf diese Weise ein gleichmäßiges und flächiges Anpressen möglich, einhergehend mit der Schaffung einer sehr stabilen und belastbaren Verbindung bzw. Rohrverbindung zwischen dem ersten und dem zweiten Rohr. Insbesondere ist eine Anpressung möglich, bei welcher ein umlaufender Bereich der Dichtmanschette bzw. ein in Umfangsrichtung umlaufender Bereich der Dichtmanschette (bzw. eine in Umfangsrichtung umlaufende Fläche der Dichtmanschette) zur Gänze oder nahezu zur Gänze einen Kontakt zu der Manschette bzw. den Anpressflächen aufweist, einhergehend mit der vorteilhaften Bereitstellung einer sehr gleichmäßigen Anpressung der Dichtmanschette an die beiden Rohre.

Besonders vorteilhaft ist mit der erfindungsgemäßen Manschette insbesondere auch die Bereitstellung einer Verbindung zwischen einem ersten und einem zweiten Rohr möglich, bei welchem das zweite Rohr einen kleineren oder größeren Außendurchmesser als das erste Rohr aufweist oder umgekehrt, und zwar kann durch das Vorsehen der vergrößerbaren bzw. verkleinerbaren Überlappungsbereiche eine Anpassung der erfindungsgemäßen Manschette an die bestehenden Abweichungen der Außendurchmesser erfolgen.

Zum Herstellen einer Verbindung zwischen dem ersten Manschetten-Endabschnitt und dem zweiten Manschetten-Endabschnitt (und damit auch zum Herstellen einer Verbindung zwischen dem über die erfindungsgemäße Manschette verbindbarem ersten und zweiten Rohr) ist wenigstens ein verformbares Verbindungselement vorgesehen, wobei wenigstens ein erstes Anpresselement mit einem zweiten Anpresselement durch das wenigstens eine verformbare Verbindungselement verbunden ist. Durch Vorsehen der Verformbarkeit kann vorteilhaft z.B. bei der Bereitstellung einer Verbindung zwischen zwei Rohren mit unterschiedlichen Außendurchmessen eine Materialspannung, die durch das Verbinden der Rohre mit den unterschiedlichen Außendurchmessern entsteht, von dem Verbindungselement unter Verformung des Verbindungselements aufgenommen werden und somit die Gefahr eines Materialbruchs bzw. einer übermäßigen Verformung der Anpresselemente wirksam vermieden werden.

Das Verbindungselement besteht vorzugsweise aus einem Kunststoffmaterial, wobei das Kunststoffmaterial insbesondere ein thermoplastisches Kunststoffmaterial sein kann, mit welchem vorteilhaft eine kostengünstige Herstellung einer Vielzahl der ersten und zweiten Anpresselemente im Spritzgussverfahren möglich ist. Besonders bevorzugt kann das Kunststoffmaterial Polyamid oder Polypropylen sein.

Besonders bevorzugt kann das Verbindungselement insbesondere in radialer Richtung des ersten Kreises bzw. des ersten Manschetten-Endabschnitts und/oder in radialer Richtung des zweiten Kreises bzw. des zweiten Manschetten-Endabschnitts verformbar sein und/oder in axialer Richtung des ersten und/oder zweiten Manschetten-Endabschnitts verformbar sein. Die vorteilhafte Aufnahme von Materialspannungen bzw. mechanischen Spannungen ist jedoch nicht auf Materialspannungen bzw. mechanische Spannungen infolge unterschiedlicher Rohr-Außendurchmesser beschränkt. Es kann sich um beliebige Materialspannungen bzw. beliebige mechanische Spannungen handeln, welche z.B. durch äußere Krafteinwirkung (z.B. durch Stoßbeanspruchung) entstehen können und zur Vermeidung eines Materialbruchs vorteilhaft von dem Verbindungselement unter Verformung des Verbindungselements aufnehmbar sind.

Jedes erste und jedes zweite Anpresselement besteht wenigstens teilweise aus einem verformbaren Material. Bevorzugt besteht jedes erste und jedes zweite Anpresselement zur Gänze aus dem verformbaren Material. Das verformbare Material ist bevorzugt ein Kunststoffmaterial. Besonders bevorzugt handelt es sich bei dem Kunststoffmaterial um ein thermoplastisches Kunststoffmaterial, mit welchem vorteilhaft eine kostengünstige Herstellung einer Vielzahl der ersten und zweiten Anpresselementen im Spritzgussverfahren möglich ist. Insbesondere kann das Kunststoffmaterial Polyamid oder Polypropylen sein.

Bei einer praktischen Ausführungsform der erfindungsgemäßen Manschette bilden die der ersten Öffnung abgewandten Seiten der ersten Anpresselemente zusammen einen umlaufenden ersten Anlagebereich zum Anlegen wenigstens einer umlaufenden ersten Spannschelle aus, wobei zum Verengen der ersten Öffnung alle Überlappungsbereiche des ersten Manschetten-Endabschnitts durch Anziehen der ersten Spannschelle vergrößerbar sind, und die der zweiten Öffnung abgewandten Seiten der zweiten Anpresselemente bilden zusammen einen umlaufenden zweiten Anlagebereich zum Anlegen wenigstens einer umlaufenden zweiten Spannschelle aus, wobei zum Verengen der zweiten Öffnung alle Überlappungsbereiche des zweiten Manschetten-Endabschnitts durch Anziehen der zweiten Spannschelle vergrößerbar sind.

An den ersten bzw. den zweiten Anlagebereich kann die erste bzw. zweite Spannschelle angelegt werden, und zwar derart, dass sie den ersten bzw. zweiten Anlagebereich umgibt bzw. umfasst und somit eine umlaufende erste bzw. zweite Spannschelle bildet. Durch Anziehen der Spannschellen können der erste und zweite Endabschnitt der Dichtmanschette unter Verengung der ersten und zweiten Öffnung des ersten und zweiten Manschetten-Endabschnitts auf einfache und praktische Weise an den ersten bzw. zweiten Rohrendabschnitt des ersten bzw. zweiten Rohrs gepresst werden.

Bevorzugt können bei der obigen praktischen Ausführungsform zur Führung der ersten Spannschelle zwei den ersten Anlagebereich wenigstens abschnittsweise beidseitig begrenzende erste Spannschellen-Führungsvorrichtungen vorgesehen sein, zwischen denen die erste Spannschelle führbar ist, und zur Führung der zweiten Spannschelle können zwei den zweiten Anlagebereich wenigstens abschnittsweise beidseitig begrenzende zweite Spannschellen-Führungsvorrichtungen vorgesehen sein, zwischen denen die zweite Spannschelle führbar ist.

Durch Vorsehen der Spannschellen-Führungsvorrichtungen kann ein Verkanten der Spannschellen beim Anziehen derselben vermieden werden. Insbesondere kann durch Vorsehen der Führungsvorrichtungen auch ein ungleichmäßiges Anziehen der Spannschellen infolge einer Schrägstellung derselben relativ zur Umfangsrichtung des ersten bzw. zweiten Manschetten-Endabschnitts - was zu einem ungleichmäßigen Anpressen der Dichtmanschette an das erste und zweite Rohr führen könnte - vermieden oder wesentlich reduziert werden. Insbesondere können die Spannschellen-Führungsvorrichtungen so ausgebildet sein, dass die Spannschelle auch beim einseitigen Zusammenziehen nicht aus der Führung springen kann.

Bevorzugt ist jede erste Spannschellen-Führungsvorrichtung von einer Mehrzahl von ersten Führungsstegen gebildet, wobei an der abgewandten Seite jedes ersten Anpresselements wenigstens ein erster Führungssteg der Mehrzahl oder mehrere voneinander beabstandete erste Führungsstege der Mehrzahl vorgesehen sind, und bevorzugt ist jede zweite Spannschellen-Führungsvorrichtung von einer Mehrzahl von zweiten Führungsstegen gebildet, wobei an der abgewandten Seite jedes zweiten Anpresselements wenigstens ein zweiter Führungssteg der Mehrzahl oder mehrere voneinander beabstandete zweite Führungsstege der Mehrzahl vorgesehen sind.

Alternativ können auch nur an abgewandten Seiten von ersten Anpresselementen, die übernächste Nachbarn sind, jeweils wenigstens ein erster Führungssteg oder mehrere voneinander beabstandete erste Führungsstege vorgesehen sein bzw. es können alternativ auch nur an abgewandten Seiten von zweiten Anpresselementen, die übernächste Nachbarn sind, jeweils wenigstens ein erster Führungssteg oder mehrere voneinander beabstandete erste Führungsstege vorgesehen sein.

Das Vorsehen von mehreren voneinander beabstandeten Führungsstegen hat den Vorteil, dass diese die Verformung der ersten bzw. zweiten Anpresselemente, welche sich beim Verengen der ersten bzw. zweiten Öffnung bildet, weniger behindern bzw. einschränken, als ein sich durchgehend über einen größeren Kreisbogen erstreckender Führungssteg bzw. als eine sich durchgehend über einen größeren Kreisbogen erstreckende Führungsvorrichtung.

Bei einer weiteren praktischen Ausführungsform der erfindungsgemäßen Manschette sind zur Führung der Dichtmanschette eine erste und eine zweite Dichtmanschetten-Führungsvorrichtung vorgesehen, wobei die erste Dichtmanschetten-Führungsvorrichtung von einer Mehrzahl von ersten Führungsstegen gebildet ist, wobei die zweite Dichtmanschetten-Führungsvorrichtung von einer Mehrzahl von zweiten Führungsstegen gebildet ist, wobei an der der ersten Öffnung zugewandten Seite jedes ersten Anpresselements wenigstens ein erster Führungssteg oder mehrere voneinander beabstandete erste Führungsstege vorgesehen sind, wobei an der der zweiten Öffnung zugewandten Seite jedes zweiten Anpresselements wenigstens ein zweiter Führungssteg oder mehrere voneinander beabstandete zweite Führungsstege vorgesehen sind, und wobei die Dichtmanschette zwischen der ersten Dichtmanschetten-Führungsvorrichtung und der zweiten Dichtmanschetten-Führungsvorrichtung führbar ist.

Alternativ können bei der obigen weiteren praktischen Ausführungsform auch nur an den der ersten Öffnung zugewandten Seiten von ersten Anpresselementen, die übernächste Nachbarn sind, jeweils wenigstens ein erster Führungssteg oder mehrere voneinander beabstandete erste Führungsstege vorgesehen sein bzw. es können alternativ auch nur an den der zweiten Öffnung zugewandten Seiten von zweiten Anpresselementen, die übernächste Nachbarn sind, jeweils wenigstens ein zweiter Führungssteg oder mehrere voneinander beabstandete zweite Führungsstege vorgesehen sein.

Durch Vorsehen der ersten und zweiten Dichtmanschetten-Führungsvorrichtung kann ein Verkanten bzw. Schrägstellen der Dichtmanschette insbesondere beim Anpressen der erfindungsgemäßen Manschette an die Dichtmanschette vorteilhaft vermieden werden. Insbesondere ermöglichen die erste und zweite Dichtmanschetten-Führungsvorrichtung eine axiale Sicherung der Dichtmanschette. Das Vorsehen der mehreren voneinander beabstandeten Führungsstege hat den Vorteil, dass diese die Verformung der ersten bzw. zweiten Anpresselemente, welche sich beim Verengen der ersten bzw. zweiten Öffnung bildet, weniger behindern bzw. einschränken, als ein sich durchgehend über einen größeren Kreisbogen erstreckender Führungssteg bzw. als eine sich durchgehend über einen größeren Kreisbogen erstreckende Führungsvorrichtung.

Bei einer bevorzugten Ausführungsform der erfindungsgemäßen Manschette ist zum Fixieren des ersten Manschetten-Endabschnitts an dem ersten Endabschnitt der Dichtmanschette und/oder zum Fixieren des zweiten Manschetten-Endabschnitts an dem zweiten Endabschnitt der Dichtmanschette an wenigstens einem ersten Anpresselement und/oder an wenigstens einem zweiten Anpresselement an der der ersten Öffnung und/oder der zweiten Öffnung zugewandten Seite des Anpresselements - bzw. des ersten und/oder zweiten Anpresselements - wenigstens ein Fixierstück angebracht, das zum Fixieren in wenigstens einer zugeordneten Ausnehmung des ersten und/oder zweiten Endabschnitts der Dichtmanschette wenigstens teilweise aufnehmbar ist. Über das Fixierstück - welches besonders bevorzugt formschlüssig in der Ausnehmung bzw. Vertiefung des ersten und/oder zweiten Endabschnitts der Dichtmanschette wenigstens teilweise oder zur Gänze aufnehmbar ist - kann in Zusammenwirkung mit der Ausnehmung bzw. Vertiefung ein Verrutschen der Dichtmanschette wirksam vermeiden werden. Ferner wird durch die bereitgestellte Fixierung ein gleichmäßiges Anpressen der Manschette an die Dichtmanschette begünstigt, welches das durch das aufeinander zu bewegen eines jeden ersten Anpresselements an jedes benachbarte erste Anpresselement bzw. eines jeden zweiten Anpresselements an jedes benachbarte zweite Anpresselement erfolgt.

Bei einer praktischen Ausführungsform entspricht die Anzahl der vorgesehenen ersten Anpresselemente der Anzahl der vorgesehenen zweiten Anpresselemente, wobei die Anzahl der vorgesehenen Verbindungselemente der Anzahl der vorgesehenen ersten Anpresselemente entspricht, wobei jedes erste Anpresselement einem zweiten Anpresselement in axialer Richtung bzw. in axialer Richtung der Manschette bzw. parallel zur axialen Richtung der Manschette gegenüberliegt und mit diesem durch ein zwischen dem ersten und zweiten Anpresselement angeordnetes Verbindungselement zum Ausbilden eines Manschettenelements verbunden ist, wobei das Verbindungselement und das erste und das zweite Anpresselement besonders bevorzugt ein einstückiges Manschettenelement bilden. Jedes der einstückigen Manschettenelemente kann besonders bevorzugt aus einem Kunststoffmaterial bestehen, wobei das Kunststoffmaterial insbesondere Polyamid oder Polypropylen sein kann. Besonders bevorzugt handelt es sich bei dem Kunststoffmaterial um ein thermoplastisches Kunststoffmaterial, mit welchem vorteilhaft eine kostengünstige Herstellung einer Vielzahl der Manschettenelemente im Spritzgussverfahren möglich ist.

Bevorzugt sind bei der obigen praktischen Ausführungsform zu dem beweglichen Anbringen des ersten Anpresselements jedes Manschettenelements an einem ersten Anpresselement eines benachbarten Manschettenelements und zu dem beweglichen Anbringen des zweiten Anpresselements jedes Manschettenelements an einem zweiten Anpresselement eines benachbarten Manschettenelements an jedem Manschettenelement wenigstens zwei Führungseinrichtungen bzw. wenigstens ein Paar von Führungseinrichtungen vorgesehen, zwischen denen ein benachbartes Manschettenelement bewegbar ist. Besonders bevorzugt ist jede der Führungseinrichtungen in Form einer Schnappnase ausgebildet, wobei das benachbarte Manschettenelement rastend zwischen den Schnappnasen aufnehmbar und im aufgenommenen Zustand bewegbar ist, und zwar an dem jeweils anderen Manschettenelement.

Durch Vorsehen der Schnappnase kann die bewegliche Anbringung eines ersten Anpresselements an einen benachbarten ersten Anpresselement bzw. die bewegliche Anbringung eines zweiten Anpresselements an einen benachbarten zweiten Anpresselement manuell auf einfache und praktische Weise gelöst oder hergestellt bzw. gebildet werden. Dies hat insbesondere den Vorteil, dass die erfindungsgemäße Manschette auf einfache und praktische Weise um die zu verpressende Dichtmanschette herum zusammenbaubar ist, und zwar durch einfach vorzunehmendes Einschnappen der Manschettenelemente zwischen den Schnappnasen der jeweils benachbarten Manschettenelemente.

Bei einer weiteren praktischen Ausführungsform ist zu dem beweglichen Anbringen eines der beiden benachbarten ersten Anpresselemente an dem jeweiligen anderen ersten Anpresselement und/oder zum beweglichen Anbringen eines der beiden benachbarten zweiten Anpresselemente an dem jeweiligen anderen zweiten Anpresselement wenigstens eine Führungsnut an jedem ersten und/oder jedem zweiten Anpresselement vorgesehen, in welcher wenigstens ein Führungselement des benachbarten ersten und/oder zweiten Anpresselements beweglich geführt ist. Besonders bevorzugt sind bei dieser weiteren praktischen Ausführungsform an jedem ersten und/oder jedem zweiten Anpresselement zwei Führungsnuten vorgesehen, wobei in jeder Führungsnut jeweils ein Führungselement in Form eines Randbereichs des benachbarten ersten und/oder zweiten Anpresselements beweglich geführt ist. Auf diese Weise ist eine sehr sichere Führung möglich, die ein Verkanten oder Schrägstellen beim Verengen der ersten bzw. zweiten Öffnung wirksam verhindert und ein gleichmäßiges Anpressen der Dichtmanschette begünstigt.

Bei einer bevorzugten Ausführungsform ist in jedem Überlappungsbereich des ersten Manschetten-Endabschnitts eines der beiden benachbarten ersten Anpresselemente in einer ersten Umfangsrichtung zu dem anderen der benachbarten ersten Anpresselemente hin bewegbar und in dieser ersten Umfangrichtung mit abnehmender Dicke ausgebildet, wobei das andere der beiden Anpresselemente in einer zu der ersten Umfangsrichtung entgegengesetzten Richtung mit einer abnehmenden Dicke ausgebildet ist, wobei in jedem Überlappungsbereich des zweiten Manschetten-Endabschnitts eines der beiden benachbarten zweiten Anpresselemente in einer zweiten Umfangsrichtung zu dem anderen der benachbarten zweiten Anpresselemente hin bewegbar und in dieser zweiten Umfangrichtung mit abnehmender Dicke ausgebildet ist, wobei das andere der beiden Anpresselemente in einer zu der zweiten Umfangsrichtung entgegengesetzten Richtung mit einer abnehmenden Dicke ausgebildet ist.

Durch Vorsehen der in jedem Überlappungsbereich mit der abnehmenden Dicke ausgebildeten ersten bzw. zweiten Anpresselemente kann eine sehr gleichmäßige Anpressung über die ersten bzw. zweiten Anpressfläche erfolgen, derart, dass alle ersten bzw. zweiten Anpressflächen zusammen jeweils eine gesamte Anpressfläche bilden, die nahezu in Form einer Innenfläche eines Hohlzylinder ausgebildet ist, der ein Hohlzylinder mit einer Grundfläche in Form einer Kreisfläche ist.

Besonders bevorzugt können durch Vorsehen von entsprechenden Formschrägen nachteilige Absätze und Kanten vermieden werden, die zur Folge haben könnten, dass die Dichtmanschette beim Anpressen bzw. Verpressen eingeklemmt werden könnte oder hängen bleiben könnte.

Bei einer praktischen Ausführungsform weist im Überlappungsbereich jedes erste und/oder jedes zweite Anpresselement einen der ersten Öffnung und/oder der zweiten Öffnung zugewandten Bereich auf, der wenigstens einen Durchbruch und/oder wenigstens eine Einsenkung aufweist. Durch Vorsehen des wenigstens einen Durchbruchs und/oder der wenigstens einen Einsenkung sind die ersten bzw. zweiten Anpresselemente einfacher verformbar, so dass der Kraftaufwand beim Verengen der ersten bzw. zweiten Öffnung vorteilhaft reduziert werden kann. Ferner wird durch das Vorsehen des wenigstens einen Durchbruchs und/oder der wenigstens einen Einsenkung auch die Fehleranfälligkeit deutlich reduziert, weil Schmutz beim Verpressen in die Schlitze geschoben wird und nicht zwischen den Flächen reibt.

Bei einer weiteren praktischen Ausführungsform ist an jedem ersten Anpresselement und/oder an jedem zweiten Anpresselement wenigstens ein Anschlag zum Begrenzen der Größe des Überlappungsbereichs vorgesehen. Durch Vorsehen des wenigstens einen Anschlags kann die Größe des bzw. der Überlappungsbereiche vorteilhaft auf ein vorgegebenes Maß begrenzt werden, wobei hierbei insbesondere eine Begrenzung nach Maßgabe der Außendurchmesser der jeweils zu verbindenden Rohre möglich ist.

### Kurzbeschreibung der Zeichnungen

Nachfolgend werden Ausführungsbeispiele der Erfindung anhand der beigefügten Zeichnungen näher. Es zeigt:
- Fig. 1: eine sehr schematische Schnittdarstellung zur Veranschaulichung des Aufbaus einer erfindungsgemäßen Manschette,
- Fig. 2: eine schematische Schnittdarstellung eines Ausführungsbeispiels eines Manschetten-Endabschnitts einer erfindungsgemäßen Manschette,
- Fig. 3: eine dreidimensionale Darstellung eines ersten Ausführungsbeispiels einer erfindungsgemäßen Manschette, die aus mehreren Manschettenelementen besteht
- Fig. 4: eine dreidimensionale Darstellung eines Manschettenelements der in Fig.3 dargestellten Manschette,
- Fig. 5: eine Vorderansicht des Manschettenelements der Fig. 4,
- Fig. 6: eine Schnittdarstellung des Manschettenelements der Fig. 4 mit dem in Fig. 5 gekennzeichneten Schnittverlauf A-A,
- Fig. 7A: eine Schnittdarstellung eines Ausführungsbeispiels eines erfindungsgemäßen Systems, das ein erstes und ein zweites Rohr miteinander verbindet,
- Fig. 7B: eine Vorderansicht des Systems der Fig. 7A, zusammen mit dem ersten und zweiten Rohr,
- Fig. 8: eine dreidimensionale Darstellung eines zweiten Ausführungsbeispiels einer erfindungsgemäßen Manschette,
- Fig. 9: eine dreidimensionale Darstellung von zwei ersten und zwei zweiten Anpresselementen der Manschette der Fig. 8
- Fig. 10A-C: eine Schnittdarstellung durch ein erstes und zweites Anpresselement nach Bauart der Fig. 9, die durch ein Verbindungselement miteinander verbunden sind, zusammen mit vergrößerten Darstellungen von Teilbereichen der Schnittdarstellung
- Fig. 11A: eine dreidimensionale Darstellung eines Teilstücks bzw. eines Teilbereichs eines dritten Ausführungsbeispiels einer erfindungsgemäßen Manschette,
- Fig. 11 B: eine dreidimensionale Darstellung eines Teilstücks bzw. eines Teilbereichs eines vierten Ausführungsbeispiels einer erfindungsgemäßen Manschette,
- Fig. 11C: eine Schnittdarstellung des Teilstücks der Fig. 11B in Kombination mit einer Vorderansicht,
- Fig. 12A: eine dreidimensionale Darstellung eines Teilstücks bzw. eines Teilbereichs eines fünften Ausführungsbeispiels einer erfindungsgemäßen Manschette,
- Fig. 12B: eine dreidimensionale vergrößerte Darstellung eines Details der Fig. 12A,
- Fig. 12C: eine Schnittdarstellung des in Fig. 12B dargestellten Details,
- Fig. 12D: eine Vorderansicht in Kombination mit einer Schnittansicht des Teilstücks der Fig. 12A,
- Fig. 13: eine Schnittdarstellung zur Veranschaulichung einer Fixierung eines erfindungsgemäßen Manschetten-Endabschnitts an einer Dichtmanschette,
- Fig. 14: eine dreidimensionale Darstellung eines Teilstücks bzw. eines Teilbereichs eines sechsten Ausführungsbeispiels einer erfindungsgemäßen Manschette, und
- Fig. 15: eine dreidimensionale Darstellung eines Teilstücks bzw. eines Teilbereichs eines siebten Ausführungsbeispiels einer erfindungsgemäßen Manschette.

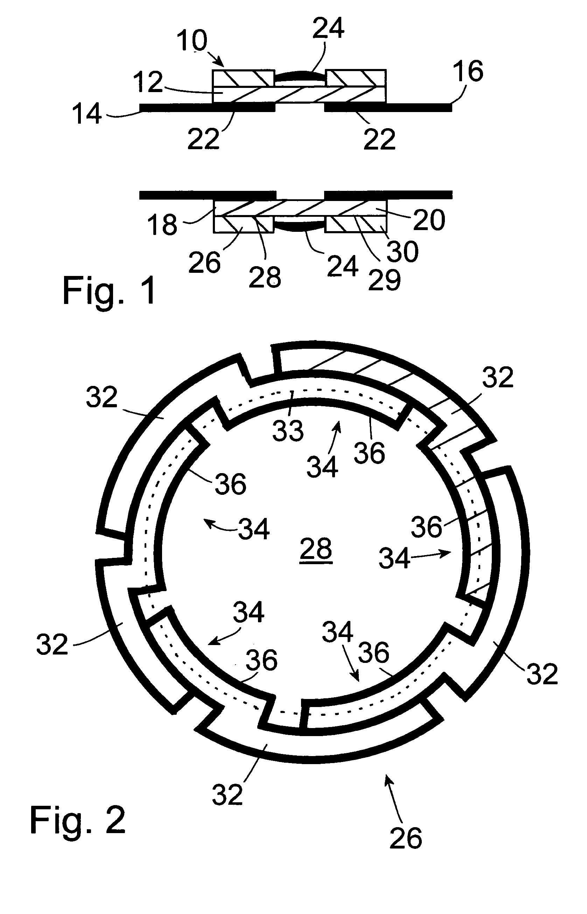

Die Fig. 1 zeigt eine sehr schematische Schnittdarstellung zur Veranschaulichung des Aufbaus einer erfindungsgemäßen Manschette 10 zum Anpressen einer Dichtmanschette 12 an ein erstes und ein zweites Rohr 14, 16 , die über die Dichtmanschette 12 miteinander verbunden sind. Zum Bilden der Verbindung nimmt ein erster Endabschnitt 18 von zwei Endabschnitten 18, 20 der Dichtmanschette 12 einen Rohrendabschnitt 22 des ersten Rohrs 14 auf und der zweite Endabschnitt 20 nimmt einen Rohrendabschnitt 22 des zweiten Rohrs 16 auf. Die Manschette 10 weist eine Mehrzahl von ersten Anpresselementen und eine Mehrzahl von zweiten Anpresselementen auf (hier nicht dargestellt), wobei wenigstens ein erstes Anpresselement mit einem zweiten Anpresselement durch wenigstens ein Verbindungselement 24 (in der Fig. 1 sind im Schnitt nur zwei Verbindungselemente 24 veranschaulicht) verbunden ist. Die ersten Anpresselemente bilden einen ersten Manschetten-Endabschnitt 26 mit einer ersten Öffnung 28 zur Aufnahme des ersten Endabschnitts 18 der Dichtmanschette 12 und die zweiten Anpresselemente bilden einen zweiten Manschetten-Endabschnitt 30 mit einer zweiten Öffnung 29 zur Aufnahme des zweiten Endabschnitts 20 der Dichtmanschette 12.

Die Fig. 2 zeigt eine schematische Schnittdarstellung eines Ausführungsbeispiels eines ersten (oder zweiten) Manschetten-Endabschnitts 26 einer erfindungsgemäßen Manschette 10, wobei der Schnitt der Schnittdarstellung rechtwinkelig zur Axialrichtung bzw. Axialerstreckung des Manschetten-Endabschnitts 26 orientiert ist. Der erste Manschetten-Endabschnitt 26 weist eine Mehrzahl von fünf ersten Anpresselementen 32 auf, die den Manschetten-Endabschnitt 26 bilden, wobei der erste Manschetten-Endabschnitt 26 eine erste Öffnung 28 zur Aufnahme des ersten Endabschnitts 18 der Dichtmanschette 12 aufweist. Die ersten Anpresselemente 32 sind zum Bilden des Manschetten-Endabschnitts 26 entlang eines Umfangs eines ersten Kreises 33 aufeinanderfolgend angeordnet. Jedes erste Anpresselement 32 besteht aus einem verformbaren Material in Form eines verformbaren Kunststoffmaterials.

Jeweils zwei benachbarte erste Anpresselemente 32 des in Fig. 2 gezeigten ersten Manschetten-Endabschnitts 26 überlappen sich in radialer Richtung des ersten Kreises 33 innerhalb eines Überlappungsbereichs 34, wobei eines der beiden benachbarten ersten Anpresselemente 32 an dem jeweiligen anderen ersten Anpresselement 32 beweglich angebracht ist (hier nicht näher veranschaulicht), und zwar in umfänglicher Richtung. Der bzw. jeder Überlappungsbereich 34 ist durch aufeinander zu bewegen der benachbarten ersten Anpresselemente 32 in umfänglicher Richtung vergrößerbar oder durch voneinander wegbewegen der benachbarten ersten Anpresselemente 32 in umfänglicher Richtung verkleinerbar.

Jedes erste Anpresselement 32 weist eine erste Anpressfläche 36 auf, die zum Anpressen des ersten Endabschnitts 18 der Dichtmanschette 12 an den Rohrendabschnitt 22 des ersten Rohrs 14 vorgesehen ist, wenn dieser in der ersten Öffnung 28 aufgenommen ist. Durch Vergrößern aller Überlappungsbereiche 34 des ersten Manschetten-Endabschnitts 26 ist die erste Öffnung 28 des ersten Manschetten-Endabschnitts 26 unter Verformung aller ersten Anpresselemente 32 verengbar. Durch das Verengen der ersten Öffnung 28 sind die ersten Anpressflächen 36 aller ersten Anpresselemente 32 an den ersten Endabschnitt 18 der Dichtmanschette 12 anpressbar.

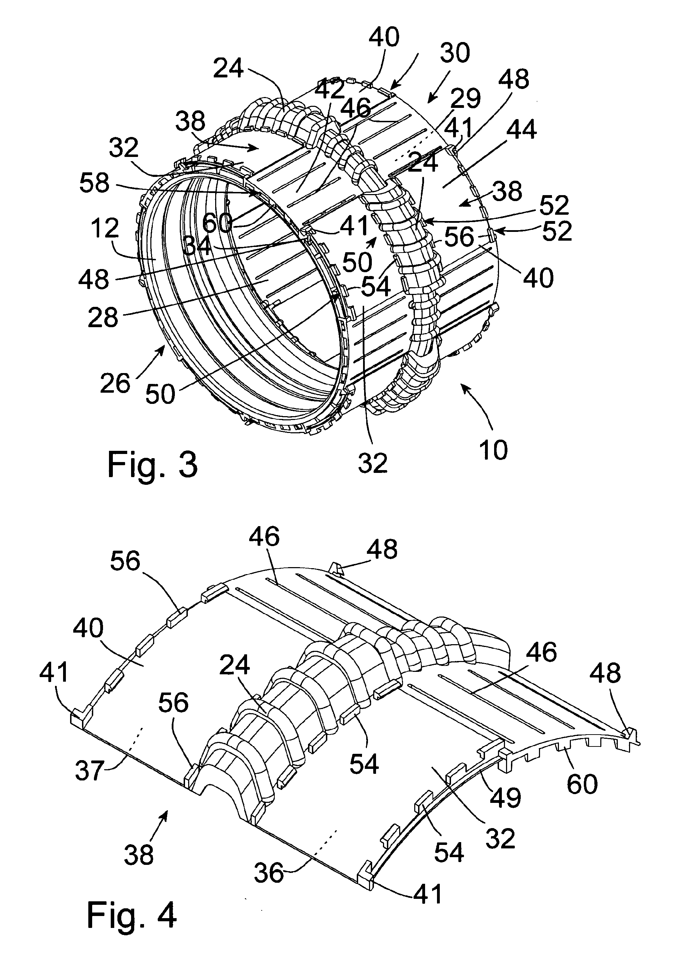

Die Fig. 3 zeigt eine dreidimensionale Darstellung eines ersten Ausführungsbeispiels einer erfindungsgemäßen Manschette 10, die aus mehreren Manschettenelementen 38 besteht.

Der erste Manschetten-Endabschnitt 26 der in Fig. 3 dargestellten Manschette 10 ist aus einer Mehrzahl von ersten Anpresselementen 32 gebildet und weist eine erste Öffnung 28 auf und der zweite Manschetten-Endabschnitt 30 ist aus einer Mehrzahl von zweiten Anpresselementen 40 gebildet und weist eine zweite Öffnung 29 auf. Die ersten Anpresselemente 32 sind zum Bilden des ersten Manschetten-Endabschnitts 26 entlang eines Umfangs eines ersten Kreises (hier nicht veranschaulicht) aufeinanderfolgend angeordnet und die zweiten Anpresselemente 40 sind zum Bilden des zweiten Manschetten-Endabschnitts 30 entlang eines Umfangs eines zweiten Kreises (hier nicht veranschaulicht) der von dem ersten Kreis beabstandet ist, aufeinanderfolgend angeordnet. Die Anzahl der ersten Anpresselemente 32 entspricht der Anzahl der zweiten Anpresselemente 40 und die Anzahl der vorgesehenen Verbindungselemente 24 entspricht der Anzahl der ersten bzw. zweiten Anpresselemente 32, 40. Jedes erste Anpresselement 32 ist einem zweiten Anpresselement 40 gegenüberliegend angeordnet - und zwar in axialer Richtung der Manschette 10 bzw. parallel zur axialen Richtung der Manschette 10 - und mit diesem durch ein zwischen dem ersten und zweiten Anpresselement 32, 40 angeordnetes Verbindungselement 24 zum Ausbilden eines Manschettenelements 38 verbunden. Jeweils ein Verbindungselement 24 und ein erstes und ein zweites einander gegenüberliegendes Anpresselement 32, 40, die durch das Verbindungselement 24 miteinander verbunden sind, bilden zusammen ein einstückiges Manschettenelement 38. Die Fig. 4 zeigt eine vergrößerte Darstellung eines der Manschettenelemente 38 der Fig. 3, wobei das erste Anpresselement 32 des Manschettenelements 38 eine erste Anpressfläche 36 aufweist, und wobei das erste Anpresselement 40 des Manschettenelements 38 eine zweite Anpressfläche 37 aufweist.

Der Fig. 3 ist zu entnehmen, dass die der ersten Öffnung 28 des ersten Manschetten-Endabschnitts 26 abgewandten Seiten der ersten Anpresselemente 32 zusammen einen umlaufenden ersten Anlagebereich 42 zum Anlegen wenigstens einer umlaufenden ersten Spannschelle (hier nicht dargestellt) ausbilden, wobei zum Verengen der ersten Öffnung 28 (in der ersten Öffnung 28 ist auch ein Teilstück einer Dichtmanschette 12 veranschaulicht) alle Überlappungsbereiche 34 des ersten Manschetten-Endabschnitts 26 durch Anziehen der ersten Spannschelle vergrößerbar sind (vgl. hierzu auch Fig. 2). Ferner bilden die der zweiten Öffnung 29 des zweiten Manschetten-Endabschnitts 30 abgewandten Seiten der zweiten Anpresselemente 40 zusammen einen umlaufenden zweiten Anlagebereich 44 zum Anlegen wenigstens einer umlaufenden zweiten Spannschelle aus (hier nicht dargestellt), wobei zum Verengen der zweiten Öffnung 29 alle Überlappungsbereiche 34 (in Fig. 3 nicht erkennbar) des zweiten Manschetten-Endabschnitts 30 durch Anziehen der zweiten Spannschelle vergrößerbar sind.

Den Fig. 3 und 4 ist zu entnehmen, dass insbesondere im Überlappungsbereich 34 jedes erste Anpresselement 32 einen der ersten Öffnung 28 zugewandten Bereich aufweist, der mehrere sich in axialer Richtung erstreckende Durchbrüche 46 bzw. Schlitze 46 aufweist. Entsprechendes ist auch für jedes zweite Anpresselement 40 vorgesehen.

Zum beweglichen Anbringen des ersten Anpresselements 32 jedes Manschettenelements 38 an einem ersten Anpresselement 32 eines benachbarten Manschettenelements 38 und zu dem beweglichen Anbringen des zweiten Anpresselements 40 jedes Manschettenelements 38 an einem zweiten Anpresselement 40 eines benachbarten Manschettenelements 38 - bzw. zum beweglichen Anbringen jedes Manschettenelements 38 an einem benachbarten Manschettenelement 38 - ist an jedem Manschettenelement 38 ein Paar von Führungseinrichtungen 48 (vgl. Fig. 3 und 4) vorgesehen, zwischen denen ein benachbartes Manschettenelement 38 bewegbar ist. Jede der Führungseinrichtungen 48 ist in Form einer Schnappnase 48 ausgebildet. Das jeweils benachbarte Manschettenelement 38 ist rastend zwischen den Schnappnasen 48 aufnehmbar und im aufgenommenen Zustand bewegbar, und zwar an dem jeweils anderen der benachbarten Manschettenelemente 38. Zum rastenden Aufnehmen des benachbarten Manschettenelements 38 zwischen den Führungseinrichtungen bzw. Schnappnasen 48 sind an jedem Manschettenelement 38 ein Paar von gegenüberliegenden Randelementen 49 vorgesehen, die in jeweils eine der Führungseinrichtungen bzw. Schnappnasen 48 des benachbarten Manschettenelements 38 einrastbar sind.

Wie der Fig. 3 entnehmbar, sind zur Führung der ersten Spannschelle zwei den ersten Anlagebereich 42 abschnittsweise beidseitig begrenzende erste Spannschellen-Führungsvorrichtungen 50 vorgesehen zwischen denen die erste Spannschelle führbar ist, und zur Führung der zweiten Spannschelle sind zwei den zweiten Anlagebereich 44 abschnittsweise beidseitig begrenzende zweite Spannschellen-Führungsvorrichtungen 52 vorgesehen zwischen denen die erste Spannschelle führbar ist. Jede erste Spannschellen-Führungsvorrichtung 50 ist von einer Mehrzahl von ersten Führungsstegen 54 gebildet, wobei an der der ersten Öffnung 28 abgewandten Seite jedes ersten Anpresselements 32 mehrere voneinander beabstandete erste Führungsstege 54 der Mehrzahl vorgesehen sind (vgl. auch Fig. 4). Jede zweite Spannschellen-Führungsvorrichtung 52 ist von einer Mehrzahl von zweiten Führungsstegen 56 gebildet, wobei an der der zweiten Öffnung 29 abgewandten Seite jedes zweiten Anpresselements 40 mehrere voneinander beabstandete zweite Führungsstege 56 der Mehrzahl vorgesehen sind (vgl. auch Fig. 4).

Zur Führung der Dichtmanschette 12 ist eine erste und eine zweite Dichtmanschetten-Führungsvorrichtung 58 (die zweite Dichtmanschetten-Führungsvorrichtung 58 ist in Fig. 3 nicht erkennbar) vorgesehen. Die erste Dichtmanschetten-Führungsvorrichtung 58 ist von einer Mehrzahl von ersten Führungsstegen 60 gebildet und die zweite Dichtmanschetten-Führungsvorrichtung 58 ist von einer Mehrzahl von zweiten Führungsstegen 60 gebildet, wobei an der der ersten Öffnung 28 zugewandten Seite jedes ersten Anpresselements 32 mehrere voneinander beabstandete erste Führungsstege 60 vorgesehen sind (vgl. auch Fig. 4), wobei an der der zweiten Öffnung 29 zugewandten Seite jedes zweiten Anpresselements 40 mehrere voneinander beabstandete zweite Führungsstege 60 vorgesehen sind (in Fig. 3 und 4 nicht erkennbar). Die Dichtmanschette 12 ist zwischen der ersten Dichtmanschetten-Führungsvorrichtung 58 und der zweiten Dichtmanschetten-Führungsvorrichtung 58 führbar. Die Erstreckung der Führungsstege 60 in radialer Richtung ist bevorzugt in vorteilhafter Weise derart bemessen, dass das Anliegen der Führungsstege 60 an der Außenfläche des ersten bzw. zweiten Rohrs 14, 16 als Indikator für eine hinreichende Dichtungsverpressung dient.

Wie Fig. 3 und Fig. 4 zu entnehmen, ist an jedem ersten Anpresselement 32 und an jedem zweiten Anpresselement 40 ferner ein Anschlag 41 zum Begrenzen der Größe des Überlappungsbereichs 34 vorgesehen.

Das Verbindungselement 24 (vgl. insbesondere Fig. 4) ist gewölbt ausgebildet, um besonders wirksam Verformungen beim Anpressen der Dichtmanschette aufzunehmen. Ferner unterstützt die Wölbung die Ringsteifigkeit der Kupplung. Die Wölbung ist abschnittsweise mit kleinerer Erstreckung in radialer Richtung ausgeführt, wobei der Abschnitt der Wölbung mit der kleineren Erstreckung in Radialrichtung in einem Abschnitt eines benachbarten Manschettenelements 38 mit der größeren Erstreckung in radialer Richtung aufnehmbar ist. Auf diese Weise werde Lücken vermieden und die Dichtmanschette geschützt. In die Wölbung sind Bälge eingebracht, die die Verformung in Umfangsrichtung erleichtern.

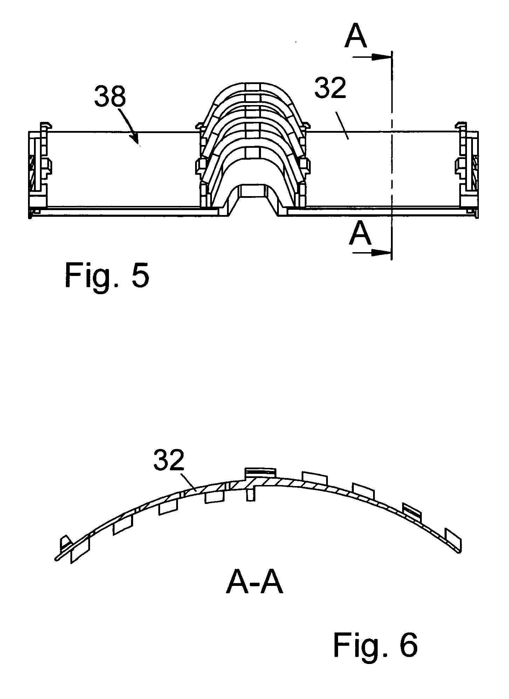

Die Fig. 5 zeigt eine Vorderansicht des Manschettenelements 38 der Fig. 4 und die Fig. 6 zeigt eine Schnittdarstellung des Manschettenelements 38 der Fig. 4 mit dem in Fig. 5 gekennzeichneten Schnittverlauf A-A. Die Schnittdarstellung der Fig. 6 ist eine Schnittdarstellung durch das erste Anpresselement 32 des Manschettenelements 38 und zeigt, dass das erste Anpresselement 32 in jeweils einer von zwei entgegengesetzten Umfangsrichtungen mit jeweils einer abnehmenden Dicke ausgebildet ist.

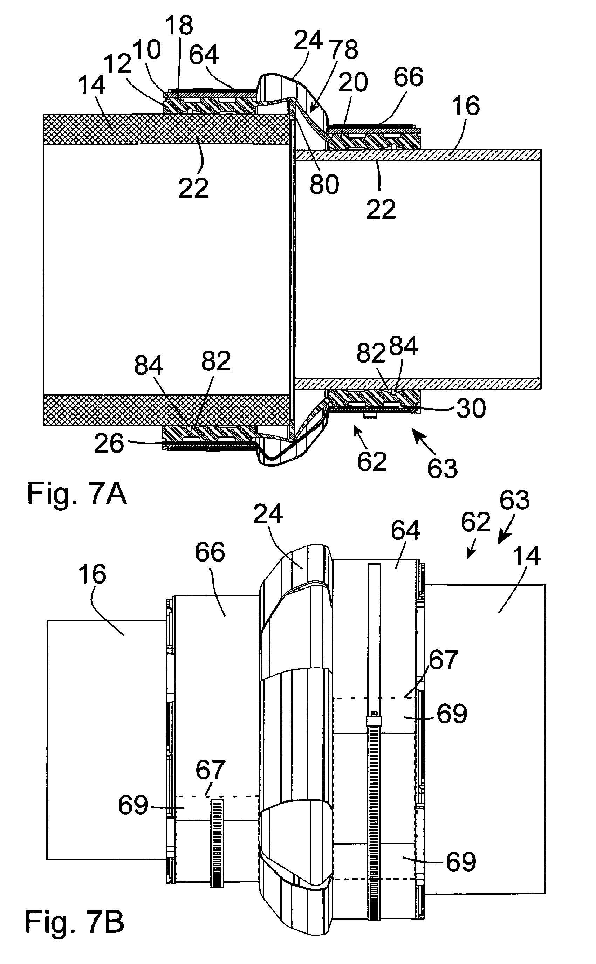

Die Fig. 7A zeigt eine Schnittdarstellung eines Ausführungsbeispiels eines erfindungsgemäßen Systems 62, das ein erstes und ein zweites Rohr 14, 16 miteinander verbindet und zusammen mit dem ersten und zweiten Rohr 14, 16 eine erfindungsgemäße Anordnung 63 bildet, wobei das zweite Rohr 16 einen kleineren Außendurchmesser als das erste Rohr 14 aufweist. Das System weist eine erfindungsgemäße Manschette 10, eine Dichtmanschette 12 und eine erste und eine zweite Spannschelle 64, 66 auf. Insbesondere diese Schnittdarstellung macht deutlich, dass mit der erfindungsgemäßen Manschette 10 insbesondere auch die Bereitstellung einer Verbindung zwischen Rohren mit unterschiedlichen Außendurchmessern möglich ist, und zwar dadurch, dass durch das Vorsehen der vergrößerbaren bzw. verkleinerbaren Überlappungsbereiche 34 vorteilhaft eine Anpassung der erfindungsgemäßen Manschette 10 an die bestehenden Abweichungen zwischen den Außendurchmesser erfolgen kann bzw. vorgenommen werden kann. Die Fig. 7B zeigt eine Vorderansicht des Systems 62 der Fig. 7A, zusammen mit dem ersten und zweiten Rohr 14, 16. Der Fig. 7B ist zu entnehmen, dass bei der ersten Spannschelle 64 und bei der zweiten Spannschelle 66 jeweils ein flächiges Unterlageelement 67 (gestrichelt dargestellt) vorgesehen ist, auf welchem die gegenüberliegenden Endabschnitte 69 (vgl. hierzu insbesondere Spannschelle 64) der ersten bzw. zweiten Spannschelle 64, 66 flächig aufliegen. Durch Vorsehen der flächigen Unterlageelemente 67 können die Endabschnitte 69 beim Anziehen der ersten bzw. zweiten Spannschelle 64, 66 auf den Unterlageelementen 67 gleiten und nicht auf den Anpresselementen. Dies hat den Vorteil, dass die gegenüberliegenden Endabschnitte 69 der ersten bzw. zweiten Spannschelle 64, 66 nicht mit den Anpresselementen verkanten können oder sich unter die Anpresselemente schieben können.

Die Dichtmanschette 12 hat einen Mittelbereich 78 der so geformt ist, dass er die Verformungen beim Verspannen aufnehmen kann. Ferner ist im mittleren Bereich der Dichtmanschette 12 eine Mittellippe 80 vorgesehen, die als Anschlag für das Rohr 14 dient und somit die Montage der Kupplung erleichtert.

An der Dichtmanschette 12 ist an jedem Endabschnitt 18, 20 jeweils eine sich ringförmig erstreckende Nut 82 vorgesehen, wobei in jeder Nut 82 jeweils eine ringförmige Quelldichtung 84 vorgesehen ist oder vorgesehen sein kann, welche eine erhöhte Sicherheit gegen Undichtheiten besonders bei nicht glatten Oberflächen (z.B. Betonrohren) bietet.

Besonders bevorzugt kann die Dichtmanschette 12 wenigstens an den Bereichen der Außenfläche der Dichtmanschette 12, die den ersten und/oder zweiten Anpressflächen zugewandt sind, sehr rutschfähig bzw. gleitfähig ausgebildet sein, und zwar für eine verbesserte Gleitwirkung bzw. ein verbessertes Gleiten der ersten und/oder zweiten Anpressflächen an der Dichtmanschette 12, einhergehend mit einer Reduzierung der Montagekräfte bzw. Anpresskräfte. Die gleitfähige bzw. rutschfähige Ausbildung kann z.B. durch Silikonisieren bzw. direktes Silikonisieren des Dichtungsmaterials oder durch nachträgliches Aufbringen von Gleitmittel geschehen.

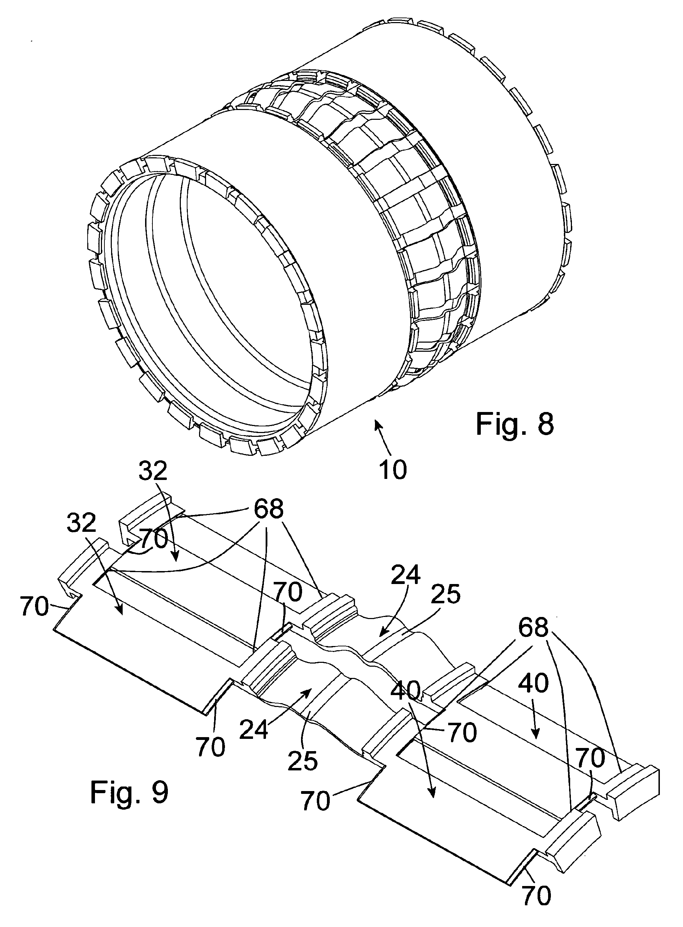

Die Fig. 8 zeigt eine dreidimensionale Darstellung eines zweiten Ausführungsbeispiels einer erfindungsgemäßen Manschette 10, wobei die Fig. 9 eine dreidimensionale Darstellung von zwei ersten und zwei zweiten Anpresselementen 32, 40 der Manschette 10 der Fig. 8 zeigt. Jeweils ein erstes Anpresselement 32 ist jeweils einem zweiten Anpresselement 40 in axialer Richtung der Manschette 10 gegenüberliegend angeordnet, wobei die Anpresselemente 32, 40 durch jeweils ein Verbindungselement 24 miteinander verbunden sind. Jedes Verbindungselement 24 weist eine Wellenstruktur mit einem Freistich 25 auf, um eine gute Verformbarkeit in axialer und radialer Richtung bereitzustellen bzw. zu schaffen.

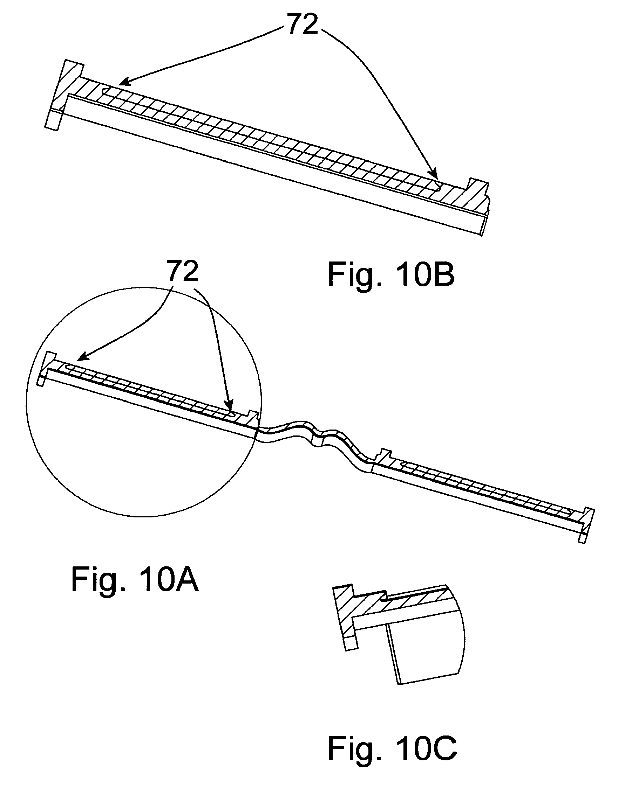

Die Fig. 9 veranschaulicht die Situation, dass bei dem in Fig. 8 gezeigten zweiten Ausführungsbeispiel zum beweglichen Anbringen eines der beiden benachbarten ersten Anpresselemente 32 an dem jeweiligen anderen ersten Anpresselement 32 (bzw. an dem anderen der benachbarten ersten Anpresselemente 32) und zum beweglichen Anbringen eines der beiden benachbarten zweiten Anpresselemente 40 an dem jeweiligen anderen zweiten Anpresselement 40 (bzw. an dem anderen der benachbarten zweiten Anpresselemente 40) jeweils zwei Führungsnuten 68 (an jedem ersten und jedem zweiten Anpresselement 32, 40) vorgesehen sind, in welche jeweils ein Führungselement in Form eines Randbereichs 70 (auch an jedem ersten und jedem zweiten Anpresselement 32, 40 vorgesehen) des benachbarten ersten bzw. zweiten Anpresselements 32, 40 beweglich geführt ist. Die Fig.10A bis 10C veranschaulichen hierzu, dass die Führung der Randbereiche in Form einer Schwalbenschwanzführung 72 ausgebildet ist, die eine Herausspringen wirksam vemeidet. Alternativ kann die Führung auch in Form einer Trapezführung ausgebildet sein.

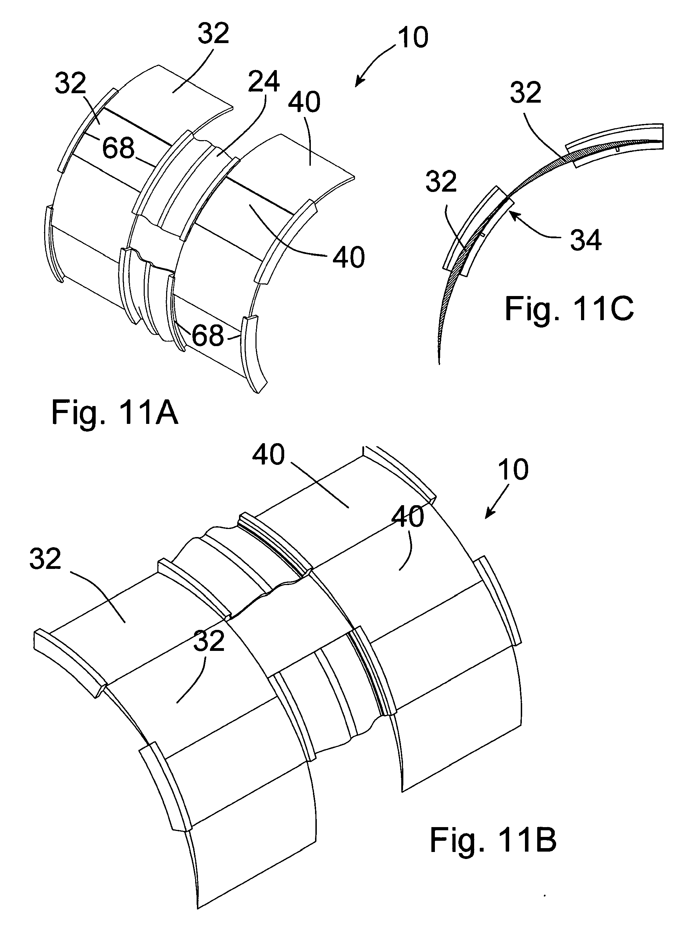

Die Fig. 11A zeigt eine dreidimensionale Darstellung eines Teilstücks bzw. eines Teilbereichs eines dritten Ausführungsbeispiels einer erfindungsgemäßen Manschette 10, bei der durch ein Verbindungselement 24 miteinander verbundene erste und zweite Anpresselemente 32, 40 vorgesehen sind und bei der erste und zweite Anpresselemente 32, 40 vorgesehen sind, die nicht über ein Verbindungselement miteinander verbunden sind. Auch hier sind Führungsnuten 68 vorgesehen, um benachbarte erste Anpresselemente 32 bzw. benachbarte zweite Anpresselemente 40 beweglich aneinander zu führen. Die nicht über ein Verbindungselement 24 verbundenen Anpresselemente 32, 40 bilden Lücken, die eine vorteilhafte Reduzierung der Montagekräfte in Verbindung mit einer deutlichen Reduzierung der Verkantungsneigung zur Folge haben, insbesondere wenn Rohre mit vergleichsweise großen Außendurchmesser-Unterschieden zu verbinden sind.

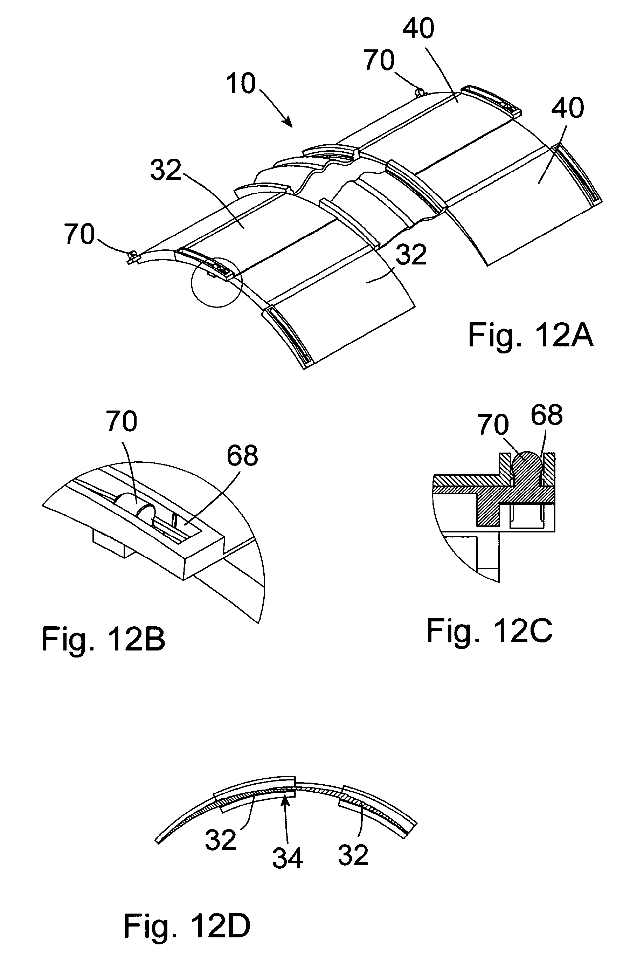

Die Fig. 11B zeigt eine dreidimensionale Darstellung eines Teilstücks bzw. eines Teilbereichs eines vierten Ausführungsbeispiels einer erfindungsgemäßen Manschette 10, die einen ähnlichen Aufbau aufweist wie die Manschette 10 der Fig. 11A, wobei die Schnittdarstellung in Fig. 11C zeigt, dass jedes Anpresselement 32 in jeweils einer von entgegengesetzten Umfangrichtungen mit abnehmender Dicke ausgebildet ist. Im Einzelnen ist aus der Fig. 11C ersichtlich, dass in einem Überlappungsbereich 34 eines der beiden benachbarten Anpresselemente 32 in einer Umfangsrichtung zu dem anderen der benachbarten Anpresselemente 32 hin bewegbar und in dieser Umfangrichtung mit abnehmender Dicke ausgebildet ist, wobei das andere der beiden Anpresselemente 32 in einer zu der Umfangsrichtung entgegengesetzten Richtung mit einer abnehmenden Dicke ausgebildet ist. Dies ist auch an dem fünften Ausführungsbeispiel vorgesehen (vgl. hierzu Fig. 12D).

Die Fig. 12A zeigt eine dreidimensionale Darstellung eines Teilstücks bzw. eines Teilbereichs des fünften Ausführungsbeispiels einer erfindungsgemäßen Manschette 10. Aus den Detaildarstellungen der Fig. 12B und C ist ersichtlich, dass bei diesem Ausführungsbeispiel zum beweglichen Anbringen eines der beiden benachbarten ersten Anpresselemente 32 an dem jeweiligen anderen ersten Anpresselement 32 (der benachbarten ersten Anpresselemente 32) eine Führungsnut 68 an jedem ersten Anpresselement 32 vorgesehen ist, in welcher ein Führungselement 70 des benachbarten ersten Anpresselements 32 beweglich geführt ist, wobei auch an jedem ersten Anpresselement 32 ein solches Führungselement 70 vorgesehen ist. Dem entsprechend sind auch an den zweiten Anpresselementen 40 baugleiche Führungsnuten 68 und Führungselemente 70 vorgesehen.

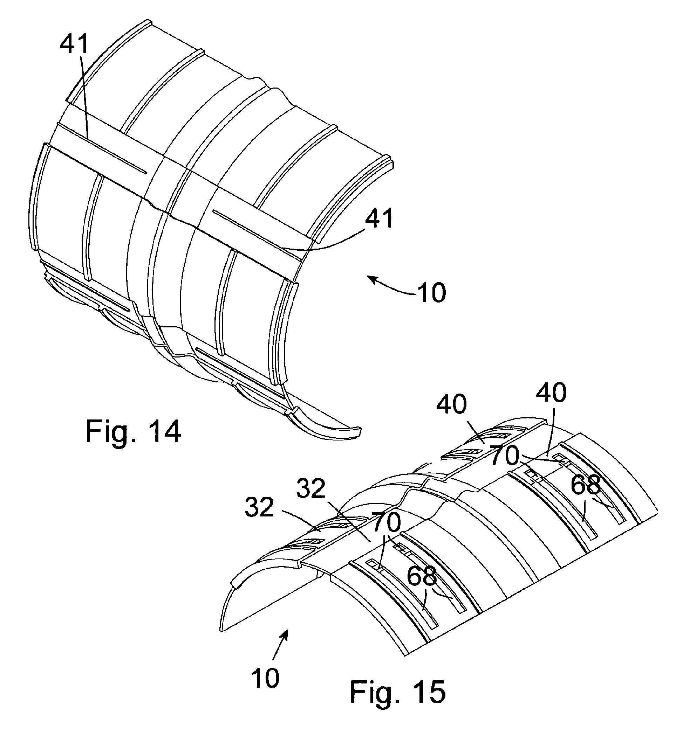

Die Fig. 14 zeigt eine dreidimensionale Darstellung eines Teilstücks bzw. eines Teilbereichs eines sechsten Ausführungsbeispiels einer erfindungsgemäßen Manschette 10. Das hier dargestellte Ausführungsbeispiel unterscheidet sich von den oben beschriebenen Ausführungsbeispielen insbesondere dadurch, dass Anschläge 41 zum Begrenzen der Größe der Überlappungsbereiche vorgesehen sind, die in Form länglicher Stege ausgebildet sind, die sich in axialer Richtung der Manschette 10 erstrecken. Insbesondere wird durch Vorsehen der Anschläge 41 wirksam vermeiden, dass die Anpresselemente mit den Anschlägen 41 sich beim Anpressen der Dichtmanschette vollständig bzw. zur Gänze unter die benachbarten Anpresselemente schieben bzw. bewegen.

Die Fig. 15 zeigt eine dreidimensionale Darstellung eines Teilstücks bzw. eines Teilbereichs eines siebten Ausführungsbeispiels einer erfindungsgemäßen Manschette 10, wobei hierbei zur Führung an jedem ersten und jedem zweiten Anpresselement 32, 40 jeweils zwei Führungsnuten 68 und jeweils zwei Führungselemente 70 vorgesehen sind.

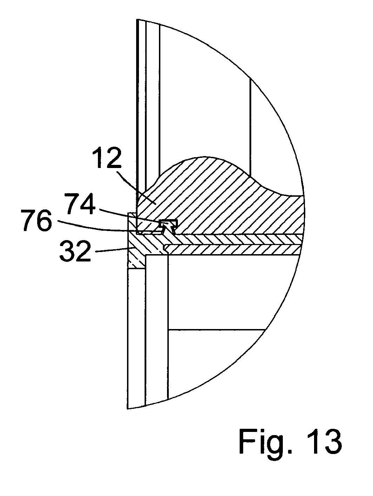

Die Fig. 13 zeigt eine Schnittdarstellung zur Veranschaulichung einer Fixierung eines erfindungsgemäßen Manschetten-Endabschnitts an einer Dichtmanschette 12. Zum Fixieren des Manschetten-Endabschnitts an einem Endabschnitt der Dichtmanschette 12 ist an wenigstens einen Anpresselement 32 an der der Öffnung des Manschetten-Endabschnitts zugewandten Seite des Anpresselements 32 wenigstens ein Fixierstück 74 angebracht, das zum Fixieren in wenigstens einer zugeordneten Ausnehmung 76 in Form einer T-Nut des Endabschnitts der Dichtmanschette 12 formschlüssig aufgenommen ist.

### Bezugszeichenliste

- 10: Manschette
- 12: Dichtmanschette
- 14: erstes Rohr
- 16: zweites Rohr
- 18: erster Endabschnitt Dichtmanschette
- 20: zweiter Endabschnitt Dichtmanschette
- 22: Rohrendabschnitt
- 24: Verbindungselement
- 25: Freistich
- 26: erster Manschetten-Endabschnitt
- 28: erste Öffnung
- 29: zweite Öffnung
- 30: zweiter Manschetten-Endabschnitt
- 32: erstes Anpresselement
- 33: Kreis
- 34: Überlappungsbereich
- 36: erste Anpressfläche
- 37: zweite Anpressfläche
- 38: Manschettenelement
- 40: zweites Anpresselement
- 41: Anschlag
- 42: erster Anlagebereich
- 44: zweiter Anlagebereich
- 46: Durchbruch
- 48: Führungseinrichtung
- 49: Randelement
- 50: erste Spannschellen-Führungsvorrichtung
- 52: zweite Spannschellen-Führungsvorrichtung
- 54: erster Führungssteg
- 56: zweiter Führungssteg
- 58: Dichtmanschetten-Führungsvorrichtung
- 60: Führungssteg
- 62: System
- 63: Anordnung
- 64: erste Spannschelle
- 66: zweite Spannschelle
- 67: flächiges Unterlageelement
- 68: Führungsnut
- 69: Endabschnitt
- 70: Führungselement
- 72: Schwalbenschwanzführung
- 74: Fixierstück
- 76: Ausnehmung
- 78: Mittelbereich
- 80: Mittellippe
- 82: Nut
- 84: Quelldichtung

## Patentansprüche

1. Manschette (10) zum Anpressen einer Dichtmanschette (12) an ein erstes und ein zweites Rohr (14, 16), die über die Dichtmanschette (12) miteinander verbunden sind, wobei zum Bilden der Verbindung ein erster von zwei Endabschnitten (18, 20) der Dichtmanschette (12) einen Rohrendabschnitt (22) des ersten Rohrs (14) aufnimmt und der zweite Endabschnitt (20) einen Rohrendabschnitt (22) des zweiten Rohrs (16) aufnimmt,
wobei die Manschette (10) eine Mehrzahl von ersten Anpresselementen (32) und eine Mehrzahl von zweiten Anpresselementen (40) aufweist,
wobei jedes erste und jedes zweite Anpresselement (32, 40) wenigstens teilweise aus einem verformbaren Material besteht,
wobei die ersten Anpresselemente (32) entlang eines Umfangs eines ersten Kreises (33) aufeinanderfolgend angeordnet sind und einen ersten Manschetten-Endabschnitt (26) mit einer ersten Öffnung (28) zur Aufnahme des ersten Endabschnitts (18) der Dichtmanschette (12) bilden,
wobei die zweiten Anpresselemente (40) entlang eines Umfangs eines zweiten Kreises aufeinanderfolgend angeordnet sind und einen zweiten Manschetten-Endabschnit (30) mit einer zweiten Öffnung (29) zur Aufnahme des zweiten Endabschnitts (20) der Dichtmanschette (12) bilden,
wobei wenigstens ein erstes Anpresselement (32) mit einem zweiten Anpresselement (40) durch wenigstens ein verformbares Verbindungselement (24) verbunden ist,
wobei sich jeweils zwei benachbarte erste Anpresselemente (32) des ersten Manschetten-Endabschnitts (26) in radialer Richtung des ersten Kreises innerhalb eines Überlappungsbereichs (34) überlappen, wobei eines der beiden benachbarten ersten Anpresselemente (32) an dem jeweiligen anderen ersten Anpresselement (32) beweglich angebracht ist, und wobei der Überlappungsbereich (34) durch Aufeinanderzubewegen der benachbarten ersten Anpresselemente (32) vergrößerbar oder durch voneinander wegbewegen der benachbarten ersten Anpresselemente (32) verkleinerbar ist,
wobei sich jeweils zwei benachbarte zweite Anpresselemente (40) des zweiten Manschetten-Endabschnitts (30) in radialer Richtung des zweiten Kreises innerhalb eines Überlappungsbereichs (34) überlappen, wobei eines der beiden benachbarten zweiten Anpresselemente (40) an dem jeweiligen anderen zweiten Anpresselement (40) beweglich angebracht ist, und wobei der Überlappungsbereich (34) durch Aufeinanderzubewegen der benachbarten zweiten Anpresselemente (40) vergrößerbar oder durch voneinander wegbewegen der benachbarten zweiten Anpresselemente (40) verkleinerbar ist,
wobei jedes erste Anpresselement (32) wenigstens eine erste Anpressfläche (36) aufweist, die zum Anpressen des ersten Endabschnitts (18) der Dichtmanschette (12) an den Rohrendabschnitt (22) des ersten Rohrs (14) vorgesehen ist, wenn dieser in der ersten Öffnung (28) aufgenommen ist,
wobei jedes zweite Anpresselement (40) wenigstens eine zweite Anpressfläche (37) aufweist, die zum Anpressen des zweiten Endabschnitts (20) der Dichtmanschette (12) an den Rohrendabschnitt (22) des zweiten Rohrs (16) vorgesehen ist, wenn dieser in der zweiten Öffnung (29) aufgenommen ist,
wobei durch Vergrößern aller Überlappungsbereiche (34) des ersten Manschetten-Endabschnitts (26) die erste Öffnung (28) des ersten Manschetten-Endabschnitts (26) unter Verformung aller ersten Anpresselemente (32) verengbar ist,
wobei durch Vergrößern aller Überlappungsbereiche (34) des zweiten Manschetten-Endabschnitts (30) die zweite Öffnung (29) des zweiten Manschetten-Endabschnitts (30) unter Verformung aller zweiten Anpresselemente (40) verengbar ist,
wobei durch das Verengen der ersten Öffnung (28) die ersten Anpressflächen (36) aller ersten Anpresselemente (32) an den ersten Endabschnitt (18) der Dichtmanschette (12) anpressbar sind, und
wobei durch das Verengen der zweiten Öffnung (29) die zweiten Anpressflächen (37) aller zweiten Anpresselemente (40) an den zweiten Endabschnitt (20) der Dichtmanschette (12) anpressbar sind.

2. Manschette (10) nach Anspruch 1, **dadurch gekennzeichnet, dass** die der ersten Öffnung (28) abgewandten Seiten der ersten Anpresselemente (32) zusammen einen umlaufenden ersten Anlagebereich (42) zum Anlegen wenigstens einer umlaufenden ersten Spannschelle (64) ausbilden, wobei zum Verengen der ersten Öffnung (28) alle Überlappungsbereiche (34) des ersten Manschetten-Endabschnitts (26) durch Anziehen der ersten Spannschelle (64) vergrößerbar sind, und dass die der zweiten Öffnung (29) abgewandten Seiten der zweiten Anpresselemente (40) zusammen einen umlaufenden zweiten Anlagebereich (44) zum Anlegen wenigstens einer umlaufenden zweiten Spannschelle (66) ausbilden, wobei zum Verengen der zweiten Öffnung (29) alle Überlappungsbereiche(34) des zweiten Manschetten-Endabschnitts (30) durch Anziehen der zweiten Spannschelle (66) vergrößerbar sind.

3. Manschette (10) nach Anspruch 2, **dadurch gekennzeichnet, dass** zur Führung der ersten Spannschelle (64) zwei den ersten Anlagebereich (42) wenigstens abschnittsweise beidseitig begrenzende erste Spannschellen-Führungsvorrichtungen (50) vorgesehen sind, zwischen denen die erste Spannschelle (64) führbar ist, und dass zur Führung der zweiten Spannschelle (66) zwei den zweiten Anlagebereich (44) wenigstens abschnittsweise beidseitig begrenzende zweite Spannschellen-Führungsvorrichtungen (52) vorgesehen sind, zwischen denen die zweite Spannschelle (66) führbar ist.

4. Manschette (10) nach Anspruch 3, **dadurch gekennzeichnet, dass** jede erste Spannschellen-Führungsvorrichtung (50) von einer Mehrzahl von ersten Führungsstegen (54) gebildet ist, wobei an der abgewandten Seite jedes ersten Anpresselements (32) wenigstens ein erster Führungssteg (54) der Mehrzahl oder mehrere voneinander beabstandete erste Führungsstege (54) der Mehrzahl vorgesehen sind, und dass jede zweite Spannschellen-Führungsvorrichtung (52) von einer Mehrzahl von zweiten Führungsstegen (56) gebildet ist, wobei an der abgewandten Seite jedes zweiten Anpresselements (40) wenigstens ein zweiter Führungssteg (56) der Mehrzahl oder mehrere voneinander beabstandete zweite Führungsstege (56) der Mehrzahl vorgesehen sind.

5. Manschette (10) nach einem der vorangehenden Ansprüche, **dadurch gekennzeichnet, dass** zur Führung der Dichtmanschette (12) eine erste und eine zweite Dichtmanschetten-Führungsvorrichtung (58) vorgesehen sind, wobei die erste Dichtmanschetten-Führungsvorrichtung (58) von einer Mehrzahl von ersten Führungsstegen (60) gebildet ist, wobei die zweite Dichtmanschetten-Führungsvorrichtung (58) von einer Mehrzahl von zweiten Führungsstegen (60) gebildet ist, wobei an der der ersten Öffnung (28) zugewandten Seite jedes ersten Anpresselements (32) wenigstens ein erster Führungssteg (60) oder mehrere voneinander beabstandete erste Führungsstege (60) vorgesehen sind, wobei an der der zweiten Öffnung (29) zugewandten Seite jedes zweiten Anpresselements (40) wenigstens ein zweiter Führungssteg (60) oder mehrere voneinander beabstandete zweite Führungsstege (60) vorgesehen sind, und wobei die Dichtmanschette (12) zwischen der ersten Dichtmanschetten-Führungsvorrichtung (58) und der zweiten Dichtmanschetten-Führungsvorrichtung (58) führbar ist.

6. Manschette (10) nach einem der vorangehenden Ansprüche, **dadurch gekennzeichnet, dass** zum Fixieren des ersten Manschetten-Endabschnitts (26) an dem ersten Endabschnitt (18) der Dichtmanschette (12) und/oder zum Fixieren des zweiten Manschetten-Endabschnitts (30) an dem zweiten Endabschnitt (20) der Dichtmanschette (12) an wenigstens einem ersten Anpresselement (32) und/oder an wenigstens einem zweiten Anpresselement (40) an der der ersten Öffnung (28) und/oder der zweiten Öffnung (29) zugewandten Seite des Anpresselements (32, 40) wenigstens ein Fixierstück (74) angebracht ist, das zum Fixieren in wenigstens einer zugeordneten Ausnehmung (76) des ersten und/oder zweiten Endabschnitts (18, 20) der Dichtmanschette (12) wenigstens teilweise aufnehmbar ist.

7. Manschette (10) nach einem der vorangehenden Ansprüche, **dadurch gekennzeichnet, dass** die Anzahl der vorgesehenen ersten Anpresselemente (32) der Anzahl der vorgesehenen zweiten Anpresselemente (40) entspricht, wobei die Anzahl der vorgesehenen Verbindungselemente (24) der Anzahl der vorgesehenen ersten Anpresselemente (32) entspricht, wobei jedes erste Anpresselement (32) einem zweiten Anpresselement (32) in axialer Richtung gegenüberliegt und mit diesem durch ein zwischen dem ersten und zweiten Anpresselement (32, 40) angeordnetes Verbindungselement (24) zum Ausbilden eines Manschettenelements (38) verbunden ist.

8. Manschette (10) nach Anspruch 7, **dadurch gekennzeichnet, dass** das Verbindungselement (24) und das erste und das zweite Anpresselement (32, 40) ein einstückiges Manschettenelement (38) bilden.

9. Manschette (10) nach Anspruch 8, **dadurch gekennzeichnet, dass** zu dem beweglichen Anbringen des ersten Anpresselements (32) jedes Manschettenelements (38) an einem ersten Anpresselement (32) eines benachbarten Manschettenelements (38) und zu dem beweglichen Anbringen des zweiten Anpresselements (40) jedes Manschettenelements (38) an einem zweiten Anpresselement (40) eines benachbarten Manschettenelements (38) an jedem Manschettenelement (38) wenigstens zwei Führungseinrichtungen (48) vorgesehen sind ,zwischen denen ein benachbartes Manschettenelement (38) bewegbar ist.

10. Manschette (10) nach einem der vorangehenden Ansprüche, **dadurch gekennzeichnet, dass** zu dem beweglichen Anbringen eines der beiden benachbarten ersten Anpresselemente (32) an dem jeweiligen anderen ersten Anpresselement (32) und/oder zum beweglichen Anbringen eines der beiden benachbarten zweiten Anpresselemente (40) an dem jeweiligen anderen zweiten Anpresselement (40) wenigstens eine Führungsnut (68) an jedem ersten und/oder jedem zweiten Anpresselement (32, 40) vorgesehen ist, in welcher wenigstens ein Führungselement (70) des benachbarten ersten und/oder zweiten Anpresselements (32, 40) beweglich geführt ist.

11. Manschette (10) nach Anspruch 10, **dadurch gekennzeichnet, dass** an jedem ersten und/oder jedem zweiten Anpresselement (32, 40) zwei Führungsnuten (68) vorgesehen sind, wobei in jeder Führungsnut jeweils ein Führungselement (70) in Form eines Randbereichs des benachbarten ersten und/oder zweiten Anpresselements (32, 40) beweglich geführt ist.

12. Manschette (10) nach einem der vorangehenden Ansprüche, **dadurch gekennzeichnet, dass** in jedem Überlappungsbereich (34) des ersten Manschetten-Endabschnitts (26) eines der beiden benachbarten ersten Anpresselemente (32) in einer ersten Umfangsrichtung zu dem anderen der benachbarten ersten Anpresselemente (32) hin bewegbar und in dieser ersten Umfangrichtung mit abnehmender Dicke ausgebildet ist, wobei das andere der beiden Anpresselemente (32) in einer zu der ersten Umfangsrichtung entgegengesetzten Richtung mit einer abnehmenden Dicke ausgebildet ist, wobei in jedem Überlappungsbereich (34) des zweiten Manschetten-Endabschnitts (30) eines der beiden benachbarten zweiten Anpresselemente in einer zweiten Umfangsrichtung zu dem anderen der benachbarten zweiten Anpresselemente (40) hin bewegbar und in dieser zweiten Umfangrichtung mit abnehmender Dicke ausgebildet ist, wobei das andere der beiden Anpresselemente (40) in einer zu der zweiten Umfangsrichtung entgegengesetzten Richtung mit einer abnehmenden Dicke ausgebildet ist.

13. Manschette (10) nach einem der vorangehenden Ansprüche, **dadurch gekennzeichnet, dass** im Überlappungsbereich (34) jedes erste und/oder jedes zweite Anpresselement (32, 40) einen der ersten Öffnung und/oder der zweiten Öffnung (28, 29) zugewandten Bereich aufweist, der wenigstens einen Durchbruch (46) und/oder wenigstens eine Einsenkung aufweist.

14. System (62) mit einer Manschette (10) nach einem der Ansprüche 1 bis 13, einer Dichtmanschette (12), wenigstens einer ersten Spannschelle (64) und wenigstens einer zweiten Spannschelle (66).

15. Anordnung (63) umfassend ein System (62) nach Anspruch 14 und ein erstes und ein zweites Rohr (14, 16), die über die Dichtmanschette (12) miteinander verbunden sind, wobei zum Bilden der Verbindung ein erster von zwei Endabschnitten (18, 20) der Dichtmanschette (12) einen Rohrendabschnitt (22) des ersten Rohrs (14) aufnimmt und der zweite Endabschnitt (20) einen Rohrendabschnitt (22) des zweiten Rohrs (16) aufnimmt, wobei der erste Manschetten-Endabschnitt (26) an den ersten Endabschnitt (18) der Dichtmanschette (12) gepresst ist, wobei der zweite Manschetten-Endabschnitt (30) an den zweiten Endabschnitt (20) der Dichtmanschette (12) gepresst ist.

## Claims

1. Sleeve (10) for pressing a sealing sleeve (12) onto a first and a second pipe (14, 16), which are connected to one another via the sealing sleeve (12), wherein, in order to form the connection, a first of two end portions (18, 20) of the sealing sleeve (12) accommodates an end portion (22) of the first pipe (14) and the second end portion (20) accommodates an end portion (22) of the second pipe (16),
wherein the sleeve (10) has a plurality of first pressing-on elements (32) and a plurality of second pressing-on elements (40),
wherein each first and each second pressing-on element (32, 40) consists, at least in part, of a deformable material,
wherein the first pressing-on elements (32) are arranged one after the other along a circumference of a first circle (33) and form a first sleeve end portion (26) with a first opening (28) for accommodating the first end portion (18) of the sealing sleeve (12),
wherein the second pressing-on elements (40) are arranged one after the other along a circumference of a second circle and form a second sleeve end portion (30) with a second opening (29) for accommodating the second end portion (20) of the sealing sleeve (12),
wherein at least one first pressing-on element (32) is connected to a second pressing-on element (40) by at least one deformable connecting element (24),
wherein in each case two adjacent first pressing-on elements (32) of the first sleeve end portion (26) overlap in the radial direction of the first circle within an overlapping region (34), wherein one of the two adjacent first pressing-on elements (32) is fitted in a movable manner on the respective other first pressing-on element (32), and
wherein the overlapping region (34) can be increased in size by virtue of the adjacent first pressing-on elements (32) being moved toward one another or can be reduced in size by virtue of the adjacent first pressing-on elements (32) being moved away from one another,
wherein in each case two adjacent second pressing-on elements (40) of the second sleeve end portion (30) overlap in the radial direction of the second circle within an overlapping region (34), wherein one of the two adjacent second pressing-on elements (40) is fitted in a movable manner on the respective other second pressing-on element (40), and wherein the overlapping region (34) can be increased in size by virtue of the adjacent second pressing-on elements (40) being moved toward one another and can be reduced in size by virtue of the adjacent second pressing-on elements (40) being moved away from one another,
wherein each first pressing-on element (32) has at least one first pressing-on surface (36), which is provided for pressing the first end portion (18) of the sealing sleeve (12) onto the end portion (22) of the first pipe (14) when said pipe end portion is accommodated in the first opening (28),
wherein each second pressing-on element (40) has at least one second pressing-on surface (37), which is provided for pressing the second end portion (20) of the sealing sleeve (12) onto the end portion (22) of the second pipe (16) when said pipe end portion is accommodated in the second opening (29),
wherein increasing the size of all the overlapping regions (34) of the first sleeve end portion (26) makes it possible to narrow the first opening (28) of the first sleeve end portion (26), all the first pressing-on elements (32) being deformed in the process, wherein increasing the size of all the overlapping regions (34) of the second sleeve end portion (30) makes it possible to narrow the second opening (29) of the second sleeve end portion (30), all the second pressing-on elements (40) being deformed in the process,
wherein narrowing the first opening (28) makes it possible for the first pressing-on surfaces (36) of all the first pressing-on elements (32) to be pressed onto the first end portion (18) of the sealing sleeve (12), and
wherein narrowing the second opening (29) makes it possible for the second pressing-on surfaces (37) of all the second pressing-on elements (40) to be pressed onto the second end portion (20) of the sealing sleeve (12).

2. Sleeve (10) according to Claim 1, **characterized in that** those sides of the first pressing-on elements (32) which are directed away from the first opening (28) together form an encircling first abutment region (42) on which at least one encircling first tensioning clamp (64) can be positioned, wherein, in order to narrow the first opening (28), all the overlapping regions (34) of the first sleeve end portion (26) can be increased in size by virtue of the first tensioning clamp (64) being tightened, and **in that** those sides of the second pressing-on elements (40) which are directed away from the second opening (29) together form an encircling second abutment region (44) on which at least one encircling second tensioning clamp (66) can be positioned, wherein, in order to narrow the second opening (29), all the overlapping regions (34) of the second sleeve end portions (30) can be increased in size by virtue of the second tensioning clamp (66) being tightened.

3. Sleeve (10) according to Claim 2, **characterized in that**, in order to guide the first tensioning clamp (64), two first tensioning-clamp-guiding devices (50) are provided, these bounding the first abutment region (42), at least in part, on either side and being able to guide the first tensioning clamp (64) between them, and **in that**, in order to guide the second tensioning clamp (66), two second tensioning-clamp-guiding devices (52) are provided, these bounding the second abutment region (44), at least in part, on either side and being able to guide the second tensioning clamp (66) between them.

4. Sleeve (10) according to Claim 3, **characterized in that** each first tensioning-clamp-guiding device (50) is formed by a plurality of first guiding crosspieces (54), wherein at least one first guiding crosspiece (54) of the plurality is, or a plurality of spaced-apart first guiding crosspieces (54) of the plurality are, provided on the remote side of each first pressing-on element (32), and **in that** each second tensioning-clamp-guiding device (52) is formed by a plurality of second guiding crosspieces (56), wherein at least one second guiding crosspiece (56) of the plurality is, or a plurality of spaced-apart second guiding crosspieces (56) of the plurality are, provided on the remote side of each second pressing-on element (40).

5. Sleeve (10) according to one of the preceding claims, **characterized in that**, in order to guide the sealing sleeve (12), a first and a second sealing-sleeve-guiding device (58) are provided, wherein the first sealing-sleeve-guiding device (58) is formed by a plurality of first guiding crosspieces (60), wherein the second sealing-sleeve-guiding device (58) is formed by a plurality of second guiding crosspieces (60), wherein at least one first guiding crosspiece (60) is, or a plurality of spaced-apart first guiding crosspieces (60) are, provided on that side of each first pressing-on element (32) which is directed toward the first opening (28), wherein at least one second guiding crosspiece (60) is, or a plurality of spaced-apart second guiding crosspieces (60) are, provided on that side of each second pressing-on element (40) which is directed toward the second opening (29), and wherein the sealing sleeve (12) can be guided between the first sealing-sleeve-guiding device (58) and the second sealing-sleeve-guiding device (58).

6. Sleeve (10) according to one of the preceding claims, **characterized in that**, in order to fix the first sleeve end portion (26) on the first end portion (18) of the sealing sleeve (12) and/or in order to fix the second sleeve end portion (30) on the second end portion (20) of the sealing sleeve (12), at least one fixing component (74) is fitted on at least one first pressing-on element (32) and/or on at least one second pressing-on element (40), on that side of the pressing-on element (32, 40) which is directed toward the first opening (28) and/or the second opening (29), and said fixing component, for fixing purposes, can be accommodated, at least in part, in at least one associated recess (76) of the first and/or second end portion (18, 20) of the sealing sleeve (12).

7. Sleeve (10) according to one of the preceding claims, **characterized in that** the number of first pressing-on elements (32) provided corresponds to the number of second pressing-on elements (40) provided, wherein the number of connecting elements (24) provided corresponds to the number of first pressing-on elements (32) provided, wherein each first pressing-on element (32) is located axially opposite a second pressing-on element (32) and is connected thereto by a connecting element (24), arranged between the first and second pressing-on elements (32, 40), in order to form a sleeve element (38).

8. Sleeve (10) according to Claim 7, **characterized in that** the connecting element (24) and the first and the second pressing-on elements (32, 40) form a single-piece sleeve element (38).

9. Sleeve (10) according to Claim 8, **characterized in that**, in order for the first pressing-on element (32) of each sleeve element (38) to be fitted in a movable manner on a first pressing-on element (32) of an adjacent sleeve element (38) and in order for the second pressing-on element (40) of each sleeve element (38) to be fitted in a movable manner on a second pressing-on element (40) of an adjacent sleeve element (38), at least two guiding means (48) are provided on each sleeve element (38), it being possible for an adjacent sleeve element (38) to be moved between said guiding means.

10. Sleeve (10) according to one of the preceding claims, **characterized in that**, in order for one of the two adjacent first pressing-on elements (32) to be fitted in a movable manner on the respective other first pressing-on element (32) and/or in order for one of the two adjacent second pressing-on elements (40) to be fitted in a movable manner on the respective other second pressing-on element (40), at least one guiding groove (68) is provided on each first and/or each second pressing-on element (32, 40), at least one guiding element (70) of the adjacent first and/or second pressing-on element (32, 40) being guided in a movable manner in said guiding groove.

11. Sleeve (10) according to Claim 10, **characterized in that** two guiding grooves (68) are provided on each first and/or each second pressing-on element (32, 40), wherein in each case one guiding element (70) in the form of a peripheral region of the adjacent first and/or second pressing-on element (32, 40) is guided in a movable manner in each guiding groove.

12. Sleeve (10) according to one of the preceding claims, **characterized in that**, in each overlapping region (34) of the first sleeve end portion (26), one of the two adjacent first pressing-on elements (32) can be moved in a first circumferential direction toward the other of the adjacent first pressing-on elements (32) and is designed with decreasing thickness in said first circumferential direction, wherein the other of the two pressing-on elements (32) is designed with a decreasing thickness in a direction counter to the first circumferential direction, wherein, in each overlapping region (34) of the second sleeve end portion (30), one of the two adjacent second pressing-on elements can be moved in a second circumferential direction toward the other of the adjacent second pressing-on elements (40) and is designed with decreasing thickness in said second circumferential direction, wherein the other of the two pressing-on elements (40) is designed with a decreasing thickness in a direction counter to the second circumferential direction.

13. Sleeve (10) according to one of the preceding claims, **characterized in that**, in the overlapping region (34), each first and/or each second pressing-on element (32, 40) has a region which is directed toward the first opening and/or the second opening (28, 29) and has at least one through-passage (46) and/or at least one hollow.

14. System (62) having a sleeve (10) according to one of Claims 1 to 13, having a sealing sleeve (12), and having at least one first tensioning clamp (64) and at least one second tensioning clamp (66).

15. Arrangement (63) comprising a system (62) according to Claim 14 and comprising a first and a second pipe (14, 16), which are connected to one another via the sealing sleeve (12), wherein, in order to form the connection, a first of two end portions (18, 20) of the sealing sleeve (12) accommodates an end portion (22) of the first pipe (14) and the second end portion (20) accommodates an end portion (22) of the second pipe (16), wherein the first sleeve end portion (26) is pressed onto the first end portion (18) of the sealing sleeve (12), and wherein the second sleeve end portion (30) is pressed onto the second end portion (20) of the sealing sleeve (12).

## Revendications

1. Manchon (10) destiné à presser un manchon d'étanchéité (12) contre un premier et un deuxième tube (14, 16) qui sont raccordés l'un à l'autre par le biais du manchon d'étanchéité (12), une première de deux portions d'extrémité (18, 20) du manchon d'étanchéité (12), pour former le raccord, recevant une portion d'extrémité de tube (22) du premier tube (14) et la deuxième portion d'extrémité (20) recevant une portion d'extrémité de tube (22) du deuxième tube (16),
le manchon (10) présentant une pluralité de premiers éléments de pressage (32) et une pluralité de deuxièmes éléments de pressage (40),
chaque premier et chaque deuxième élément de pressage (32, 40) se composant au moins en partie d'un matériau déformable,
les premiers éléments de pressage (32) étant disposés les uns à la suite des autres le long d'une circonférence d'un premier cercle (33) et formant une première portion d'extrémité de manchon (26) avec une première ouverture (28) pour recevoir la première portion d'extrémité (18) du manchon d'étanchéité (12),
les deuxièmes éléments de pressage (40) étant disposés les uns es autres le long d'une circonférence d'un deuxième cercle et formant une deuxième portion d'extrémité de manchon (30) avec une deuxième ouverture (29) pour recevoir la deuxième portion d'extrémité (20) du manchon d'étanchéité (12),
au moins un premier élément de pressage (32) étant raccordé à un deuxième élément de pressage (40) par au moins un élément de raccordement déformable (24),
à chaque fois deux premiers éléments de pressage adjacents (32) de la première portion d'extrémité de manchon (26) se chevauchant dans la direction radiale du premier cercle à l'intérieur d'une région de chevauchement (34), l'un des deux premiers éléments de pressage adjacents (32) étant monté de manière déplaçable sur l'autre premier élément de pressage respectif (32), et la région de chevauchement (34) pouvant être agrandie par rapprochement l'un de l'autre des premiers éléments de pressage adjacents (32) ou pouvant être réduite par écartement l'un de l'autre des premiers éléments de pressage adjacents (32),
à chaque fois deux deuxièmes éléments de pressage adjacents (40) de la deuxième portion d'extrémité de manchon (30) se chevauchant dans la direction radiale du deuxième cercle à l'intérieur d'une région de chevauchement (34), l'un des deux deuxièmes éléments de pressage adjacents (40) étant monté de manière déplaçable sur l'autre deuxième élément de pressage respectif (40), et la région de chevauchement (34) pouvant être agrandie par rapprochement l'un de l'autre des deuxièmes éléments de pressage adjacents (40) ou pouvant être réduite par écartement l'un de l'autre des deuxièmes éléments de pressage adjacents (40),
chaque première élément de pressage (32) présentant au moins une première surface de pressage (36) qui est prévue pour presser la première portion d'extrémité (18) du manchon d'étanchéité (12) contre la portion d'extrémité de tube (22) du premier tube (14), lorsque celle-ci est reçue dans la première ouverture (28),
chaque deuxième élément de pressage (40) présentant au moins une deuxième surface de pressage (37) qui est prévue pour presser la deuxième portion d'extrémité (20) du manchon d'étanchéité (12) contre la portion d'extrémité de tube (22) du deuxième tube (16), lorsque celle-ci est reçue dans la deuxième ouverture (29),
la première ouverture (28) de la première portion d'extrémité de manchon (26), par agrandissement de toutes les régions de chevauchement (34) de la première portion d'extrémité de manchon (26), pouvant être rétrécie en déformant tous les premiers éléments de pressage (32),
la deuxième ouverture (29) de la deuxième portion d'extrémité de manchon (30), par agrandissement de toutes les régions de chevauchement (34) de la deuxième portion d'extrémité de manchon (30), pouvant être rétrécie en déformant tous les deuxièmes éléments de pressage (40),
les premières surfaces de pressage (36) de tous les premiers éléments de pressage (32), par rétrécissement de la première ouverture (28), pouvant être pressées contre la première portion d'extrémité (18) du manchon d'étanchéité (12), et
les deuxièmes surfaces de pressage (37) de tous les deuxièmes éléments de pressage (40), par rétrécissement de la deuxième ouverture (29), pouvant être pressées contre la deuxième portion d'extrémité (20) du manchon d'étanchéité (12).

2. Manchon (10) selon la revendication 1, **caractérisé en ce que** les côtés des premiers éléments de pressage (32) opposés à la première ouverture (28) constituent ensemble une première région d'appui circonférentielle (42) pour l'appui d'au moins un premier collier de serrage circonférentiel (64), toutes les régions de chevauchement (34) de la première portion d'extrémité de manchon (26), pour rétrécir la première ouverture (28), pouvant être agrandies par serrage du premier collier de serrage (64), et **en ce que** les côtés des deuxièmes éléments de pressage (40) opposés à la deuxième ouverture (29) constituent ensemble une deuxième région d'appui circonférentielle (44) pour l'appui d'au moins un deuxième collier de serrage circonférentiel (66), toutes les régions de chevauchement (34) de la deuxième portion d'extrémité de manchon (30), pour rétrécir la deuxième ouverture (29), pouvant être agrandies par serrage du deuxième collier de serrage (66).

3. Manchon (10) selon la revendication 2, **caractérisé en ce que** pour le guidage du premier collier de serrage (64), deux premiers dispositifs de guidage de collier de serrage (50) limitant de chaque côté, au moins en partie, la première région d'appui (42) sont prévus, entre lesquels le premier collier de serrage (64) peut être guidé, et **en ce que** pour le guidage du deuxième collier de serrage (66), deux deuxièmes dispositifs de guidage de collier de serrage (52) limitant de chaque côté, au moins en partie, la deuxième région d'appui (44) sont prévus, entre lesquels le deuxième collier de serrage (66) peut être guidé.

4. Manchon (10) selon la revendication 3, **caractérisé en ce que** chaque premier dispositif de guidage de collier de serrage (50) est formé par une pluralité de premières nervures de guidage (54), au moins une première nervure de guidage (54) de la pluralité ou plusieurs premières nervures de guidage (54) de la pluralité espacées les unes des autres étant prévues sur le côté opposé de chaque premier élément de pressage (32), et **en ce que** chaque deuxième dispositif de guidage de collier de serrage (52) est formé par une pluralité de deuxièmes nervures de guidage (56), au moins une deuxième nervure de guidage (56) de la pluralité ou plusieurs deuxièmes nervures de guidage (56) de la pluralité espacées les unes des autres étant prévues sur le côté opposé de chaque deuxième élément de pressage (40).

5. Manchon (10) selon l'une quelconque des revendications précédentes, **caractérisé en ce que** pour le guidage du manchon d'étanchéité (12), un premier et un deuxième dispositif de guidage de manchon d'étanchéité (58) sont prévus, le premier dispositif de guidage de manchon d'étanchéité (58) étant formé par une pluralité de premières nervures de guidage (60), le deuxième dispositif de guidage de manchon d'étanchéité (58) étant formé par une pluralité de deuxièmes nervures de guidage (60), au moins une première nervure de guidage (60) ou plusieurs premières nervures de guidage (60) espacées les unes des autres étant prévues au niveau du côté de chaque premier élément de pressage (32) tourné vers la première ouverture (28), au moins une deuxième nervure de guidage (60) ou plusieurs deuxièmes nervures de guidage (60) espacées les unes des autres étant prévues au niveau du côté de chaque deuxième élément de pressage (40) tourné vers la deuxième ouverture (29), et le manchon d'étanchéité (12) pouvant être guidé entre le premier dispositif de guidage de manchon d'étanchéité (58) et le deuxième dispositif de guidage de manchon d'étanchéité (58).

6. Manchon (10) selon l'une quelconque des revendications précédentes, **caractérisé en ce que** pour la fixation de la première portion d'extrémité de manchon (26) à la première portion d'extrémité (18) du manchon d'étanchéité (12) et/ou pour la fixation de la deuxième portion d'extrémité de manchon (30) à la deuxième portion d'extrémité (20) du manchon d'étanchéité (12), au moins une pièce de fixation (74) est montée sur au moins un premier élément de pressage (32) et/ou sur au moins un deuxième élément de pressage (40) au niveau du côté de l'élément de pressage (32, 40) tourné vers la première ouverture (28) et/ou vers la deuxième ouverture (29), laquelle peut être reçue au moins en partie pour la fixation dans au moins un évidement associé (76) de la première et/ou de la deuxième portion d'extrémité (18, 20) du manchon d'étanchéité (12).

7. Manchon (10) selon l'une quelconque des revendications précédentes, **caractérisé en ce que** le nombre des premiers éléments de pressage (32) prévus correspond au nombre des deuxièmes éléments de pressage (40) prévus, le nombre des éléments de raccordement (24) prévus correspondant au nombre des premiers éléments de pressage (32) prévus, chaque premier élément de pressage (32) étant en regard d'un deuxième élément de pressage (32) dans la direction axiale, et étant raccordé à celui-ci par un élément de raccordement (24) disposé entre le premier et le deuxième élément de pressage (32, 40) pour réaliser un élément de manchon (38).

8. Manchon (10) selon la revendication 7, **caractérisé en ce que** l'élément de raccordement (24) et le premier et le deuxième élément de pressage (32, 40) forment un élément de manchon d'une seule pièce (38).

9. Manchon (10) selon la revendication 8, **caractérisé en ce que** pour le montage mobile du premier élément de pressage (32) de chaque élément de manchon (38) sur un premier élément de pressage (32) d'un élément de manchon adjacent (38), et pour le montage mobile du deuxième élément de pressage (40) de chaque élément de manchon (38) sur un deuxième élément de pressage (40) d'un élément de manchon adjacent (38), on prévoit sur chaque élément de manchon (38) au moins deux dispositifs de guidage (48) entre lesquels peut être déplacé un élément de manchon adjacent (38).

10. Manchon (10) selon l'une quelconque des revendications précédentes, **caractérisé en ce que** pour le montage mobile de l'un des deux premiers éléments de pressage adjacents (32) sur l'autre premier élément de pressage respectif (32) et/ou pour le montage mobile de l'un des deux deuxièmes éléments de pressage adjacents (40) sur l'autre deuxième élément de pressage respectif (40), on prévoit au moins une rainure de guidage (68) sur chaque premier et/ou chaque deuxième élément de pressage (32, 40), dans laquelle au moins un élément de guidage (70) du premier et/ou du deuxième élément de pressage adjacent (32, 40) est guidé de manière déplaçable.

11. Manchon (10) selon la revendication 10, **caractérisé en ce que** sur chaque premier et/ou chaque deuxième élément de pressage (32, 40) sont prévues deux rainures de guidage (68), un élément de guidage (70) en forme de région de bord du premier et/ou du deuxième élément de pressage adjacent (32, 40) étant à chaque fois guidé de manière déplaçable dans chaque rainure de guidage.

12. Manchon (10) selon l'une quelconque des revendications précédentes, **caractérisé en ce que** dans chaque région de chevauchement (34) de la première portion d'extrémité de manchon (26), l'un des deux premiers éléments de pressage adjacents (32) peut être déplacé dans une première direction circonférentielle vers l'autre des premiers éléments de pressage adjacents (32) et est réalisé dans cette première direction circonférentielle avec une épaisseur décroissante, l'autre des deux éléments de pressage (32) étant réalisé dans une direction opposée à la première direction circonférentielle avec une épaisseur décroissante, l'un des deux deuxièmes éléments de pressage adjacents, dans chaque région de chevauchement (34) de la deuxième portion d'extrémité de manchon (30), pouvant être déplacé dans une deuxième direction circonférentielle vers l'autre des deuxièmes éléments de pressage adjacents (40) et étant réalisé dans cette deuxième direction circonférentielle avec une épaisseur décroissante, l'autre des deux éléments de pressage (40) étant réalisé dans une direction opposée à la deuxième direction circonférentielle avec une épaisseur décroissante.

13. Manchon (10) selon l'une quelconque des revendications précédentes, **caractérisé en ce que** dans la région de chevauchement (34), chaque premier et/ou chaque deuxième élément de pressage (32, 40) présente(nt) une région tournée vers la première ouverture et/ou vers la deuxième ouverture (28, 29), qui présente au moins un orifice (46) et/ou au moins un renfoncement.

14. Système (62) comprenant un manchon (10) selon l'une quelconque des revendications 1 à 13, un manchon d'étanchéité (12), au moins un premier collier de serrage (64) et au moins un deuxième collier de serrage (66).

15. Agencement (63) comprenant un système (62) selon la revendication 14 et un premier et un deuxième tube (14, 16) qui sont raccordés l'un à l'autre par le biais du manchon d'étanchéité (12), une première de deux portions d'extrémité (18, 20) du manchon d'étanchéité (12) pour former le raccord, recevant une portion d'extrémité de tube (22) du premier tube (14) et la deuxième portion d'extrémité (20) recevant une portion d'extrémité de tube (22) du deuxième tube (16), la première portion d'extrémité de manchon (26) étant pressée contre la première portion d'extrémité (18) du manchon d'étanchéité (12), la deuxième portion d'extrémité de manchon (30) étant pressée contre la deuxième portion d'extrémité (20) du manchon d'étanchéité (12).
